# EUROPÄISCHE PATENTSCHRIFT

(11) **EP 4 540 450 B1**
(45) Veröffentlichungstag und Bekanntmachung des Hinweises auf die Patenterteilung: **07.10.2026**
(21) Anmeldenummer: 23732155.9
(22) Anmeldetag: 16.06.2023
(51) Int. Cl.: D04H 3/147, D04H 3/16, D04H 1/541

(54) **VLIESSTOFF UND VORRICHTUNG ZUR HERSTELLUNG EINES VLIESSTOFFES**
NONWOVEN AND DEVICE FOR MANUFACTURING THE SAME
NON-TISSÉ ET DISPOSITIF DE FABRICATION DE NON-TISSÉ

(30) Priorität: 17.06.2022 DE 102022115200
(43) Veröffentlichungstag der Anmeldung: 23.04.2025
(73) Patentinhaber: Reifenhäuser GmbH & Co. KG Maschinenfabrik, 53844 Troisdorf (DE)
(72) Erfinder: BOHL, Patrick, 53773 Hennef (DE); RÖSNER, Andreas, 53115 Bonn (DE); WAGNER, Tobias, 50679 Köln (DE)
(74) Vertreter: Andrejewski - Honke Patent- und Rechtsanwälte Partnerschaft mbB
(86) Internationale Anmeldenummer: PCT/EP2023/066239
(87) Internationale Veröffentlichungsnummer: WO 2023/242399

(56) Entgegenhaltungen:
- EP-A1- 3 187 635
- WO-A1-2021/206312
- US-A1- 2003 171 054
- US-A1- 2019 136 426
- US-A1- 2019 161 897
- US-A1- 2019 233 993
- US-A1- 2019 309 458
- US-A1- 2021 316 238
- US-A1- 2021 355 614

## Beschreibung

Die Erfindung betrifft einen Vliesstoff mit zumindest einer Vliesbahn aus Fasern, wobei der Vliesstoff ein Prägemuster aufweist, wobei das Prägemuster aus einer Vielzahl von - vorzugsweise nicht miteinander verbundenen - Prägungen besteht. Darüber hinaus betrifft die Erfindung eine Vorrichtung und ein Verfahren zur Herstellung eines solchen Vliesstoffes mit zumindest einer Vliesbahn aus Fasern.

Vliesstoffe, sowie Vorrichtungen und Verfahren zur Herstellung von Vliesstoffen der eingangs genannten Art sind aus der Praxis und aus dem Stand der Technik in unterschiedlichen Ausführungsformen grundsätzlich bekannt. US 2019/161897 A1 beschreibt einen Vliesstoff mit Hauptprägungen und Hilfsprägungen. WO 2021/206312 A1 offenbart einen Vliesstoff mit einem Prägemuster aus einer Vielzahl von Prägungen. Die erzeugten Fasern werden üblicherweise auf einer Ablageeinrichtung zur Vliesbahn abgelegt und anschließend vorverfestigt, um die Transportfähigkeit der Vliesbahn bzw. des Vliesstoffes zu gewährleisten und um sicherzustellen, dass die Vliesbahn beim Transport durch die Vorrichtung nicht verschoben oder zerstört wird. Zur weiteren Verfestigung wird der Vliesstoff in der Regel von der Ablageeinrichtung abgelöst und beispielsweise einem Kalander mit zumindest einer Kalanderwalze, insbesondere mit einem Kalanderwalzenpaar, zugeführt. Dabei kommen oftmals Kalanderwalzen mit Prägeelementen zum Einsatz, die im Zuge der Verfestigung ein Prägemuster aus einer Vielzahl von Prägungen in den Vliesstoff einbringen. Durch die bekannten Kalandrierungsschritte wird eine zufriedenstellende Verfestigung und insbesondere eine vorteilhafte mechanische Stabilität des resultierenden Vliesstoffes erreicht. Allerdings zeichnen sich die aus der Praxis bekannten Maßnahmen, bei denen zur Verfestigung des Vliesstoffes ein Kalander mit zumindest einer Prägeelemente umfassenden Kalanderwalze eingesetzt wird, durch den Nachteil aus, dass die Verfestigungsmaßnahmen die Dicke bzw. das Volumen der Vliesstoffe beeinträchtigen und dass zudem - insbesondere aufgrund der Dimensionen der Prägungen - ein optisch wahrnehmbares Prägemuster in dem Vliesstoff vorhanden ist. Das Prägemuster ist zwar im Hinblick auf die mechanischen Eigenschaften der Vliesstoffe vorteilhaft bzw. notwendig, jedoch aus ästhetischen Gründen unvorteilhaft, da die optischen Eigenschaften dadurch in nachteilhafter Weise beeinflusst werden. Darüber hinaus können die mit den bekannten Maßnahmen erzeugten Prägemuster bzw. Prägungen von Nachteil für die weitere Handhabung bzw. Behandlung der Vliesstoffe sein.

Der Erfindung liegt demgegenüber das technische Problem zugrunde, einen Vliesstoff der eingangs genannten Art anzugeben, bei dem die vorstehend beschriebenen Nachteile effektiv und funktionssicher vermieden werden können und der sich insbesondere durch vorteilhafte mechanische Eigenschaften, beispielsweise durch eine ausreichende mechanische Festigkeit bzw. Oberflächenbeständigkeit, sowie durch eine zufriedenstellende Dicke bzw. Voluminösität auszeichnet und bei dem optische Beeinträchtigungen durch ein Prägemuster aus Prägungen reduziert bzw. weitgehend vermieden werden können. Darüber hinaus liegt der Erfindung das technische Problem zugrunde, eine Vorrichtung und ein Verfahren zur Herstellung eines solchen Vliesstoffes anzugeben.

Zur Lösung des technischen Problems lehrt die Erfindung einen Vliesstoff mit zumindest einer Vliesbahn aus Fasern, wobei der Vliesstoff ein Prägemuster aufweist, wobei das Prägemuster aus einer Vielzahl von - vorzugsweise nicht miteinander verbundenen - Prägungen besteht, wobei die Prägungen jeweils eine Prägefläche von 0,07 bis 0,18 mm², besonders bevorzugt von 0,08 bis 0,15 mm² und ganz besonders bevorzugt von 0,09 bis 0,12 mm² aufweisen und wobei der Anteil der Gesamtprägefläche des Prägemusters an der Gesamtoberfläche des Vliesstoffes 2,5 bis 8% beträgt. Es liegt im Rahmen der Erfindung, dass die Prägungen jeweils eine Prägefläche von kleiner als 0,3 mm², vorzugsweise von kleiner als 0,2 mm², bevorzugt von kleiner als 0,18 mm², besonders bevorzugt von kleiner als 0,15 mm², ganz besonders bevorzugt von kleiner als 0,12 mm², beispielsweise von kleiner als 0,1 mm² aufweisen.

Der Begriff Prägung meint im Rahmen der Erfindung insbesondere eine verdichtete Stelle des Vliesstoffes, an der der Vliesstoff im Vergleich zu seinen nicht-geprägten Bereichen insbesondere eine geringere Dicke aufweist und an der die Fasern des Vliesstoffes vorzugsweise durch Einwirkung von Druck und/oder Temperatur zumindest teilweise miteinander verbunden bzw. verschmolzen sind. Die erfindungsgemäßen Prägungen des Prägemusters sind bevorzugt durch zumindest eine Kalanderwalze mit einem Komplementärprägemuster aus Prägeelementen erzeugt. Das wird unten stehend noch näher erläutert.

Der Begriff Prägemuster meint im Rahmen der Erfindung insbesondere das sich aus der Vielzahl von Prägungen des Vliesstoffes ergebende Muster. Bei dem Prägemuster kann es sich um ein regelmäßiges und/oder um ein unregelmäßiges Prägemuster handeln. Es ist bevorzugt, dass es sich bei dem Prägemuster um ein regelmäßiges Prägemuster handelt. Dann sind die einzelnen Prägungen vorzugsweise in regelmäßigen Abständen, bevorzugt in identischen Abständen, auf dem Vliesstoff verteilt. Weiter bevorzugt ist die Prägefläche der einzelnen Prägungen des Prägemusters gemäß bevorzugter Ausführungsform der Erfindung gleich groß bzw. im Wesentlichen gleich groß. Es hat sich bewährt, dass auch die Geometrie der Prägeflächen der einzelnen Prägungen identisch bzw. im Wesentlichen identisch ist. Ganz besonders bevorzugt weist das Prägemuster gleiche bzw. gleich große Prägungen oder im Wesentlichen gleiche bzw. gleich große Prägungen mit homogener Verteilung von Prägungen gleicher Geometrie bzw. von im Wesentlichen gleicher Geometrie auf. Grundsätzlich ist es aber auch möglich, dass die einzelnen Prägungen des Prägemusters eine voneinander verschiedene Größe und/oder eine voneinander verschiedene Geometrie aufweisen und/oder dass die Prägungen in einem unregelmäßigen Prägemuster auf dem Vliesstoff angeordnet sind. Geometrie der Prägungen meint im Rahmen der Erfindung im Übrigen insbesondere die Geometrie der Prägeflächen der Prägungen in der Draufsicht.

Prägefläche einer Prägung meint im Rahmen der Erfindung insbesondere die geprägte Fläche einer Prägung, wobei bei der Bestimmung der Größe der Prägefläche ein sich gegebenenfalls im Zuge des Press- bzw. Prägevorganges bildender und die Prägung zumindest teilweise umschließender Materialüberstand bzw. Materialwulst insbesondere nicht Teil der Prägefläche einer Prägung ist. Im Falle einer Prägung bzw. Prägefläche mit einer in der Draufsicht punktförmigen bzw. kreisförmigen Geometrie entspricht die Prägefläche der Prägung beispielsweise dem Flächeninhalt der punktförmigen bzw. kreisförmigen Prägung, wobei der die Prägung gegebenenfalls umgebende Materialüberstand bzw. die Materialwulst nicht zu der Prägefläche der Prägung hinzuzählt. Dass die Prägungen des erfindungsgemäßen Vliesstoffes jeweils eine Prägefläche in dem oben stehend angegebenen Bereich aufweisen, meint im Rahmen der Erfindung insbesondere, dass zumindest 95%, vorzugsweise zumindest 97% aller Prägungen des Vliesstoffes eine Prägefläche in dem angegebenen Bereich aufweisen. Besonders bevorzugt weisen alle Prägungen des Vliesstoffes eine Prägefläche in dem angegebenen Bereich auf. Die Prägefläche einer Prägung kann im Rahmen der Erfindung insbesondere durch Auflicht- oder Durchlicht- 2D-Mikroskopie, und/oder durch Rasterelektronenmikroskopie (REM) und/oder durch Mikro-Computertomographie (µCT) ermittelt werden. Bei der entsprechenden Bildauswertung wird vorzugsweise eine der Prägeflächengeometrie zugrundeliegende bzw. der Prägeflächengeometrie entsprechende bzw. im Wesentlichen entsprechende Geometrie zugrunde gelegt und zur Auswertung über die einzelnen optisch abgebildeten Prägeflächen der Prägungen gelegt.

Dass der Vliesstoff zumindest eine Vliesbahn aus Fasern aufweist, meint im Rahmen der Erfindung insbesondere, dass der Vliesstoff zumindest eine Vliesbahn bzw. Vlieslage aus erzeugten und abgelegten Fasern aufweist. Der Vliesstoff kann gemäß einer Ausführungsform lediglich eine Vliesbahn bzw. eine Vlieslage aufweisen oder kann auch mehrere übereinander angeordnete Vliesbahnen bzw. Vlieslagen aufweisen, die zum Vlieslaminat kombiniert sind. Das wird unten stehend noch näher erläutert.

Die Erfindung hat erkannt, dass durch die erfindungsgemäßen Prägungen des Vliesstoffes mit der speziellen Größe der Prägeflächen ein Vliesstoff bereitgestellt werden kann, bei dem optische Beeinträchtigungen durch das Prägemuster aus Prägungen aufgrund der zumindest deutlich verringerten Wahrnehmbarkeit des Prägemusters für das menschliche Auge nahezu vollständig vermieden werden können und der sich nichtsdestoweniger durch vorteilhafte mechanische Eigenschaften und eine zufriedenstellende Dicke auszeichnet.

Eine besonders bevorzugte Ausführungsform der Erfindung ist dadurch gekennzeichnet, dass das Prägemuster ein unsichtbares bzw. im Wesentlichen unsichtbares Prägemuster ist, bei dem die Prägungen als unsichtbare bzw. im Wesentlichen unsichtbare Prägungen ausgebildet sind. Unsichtbar meint in diesem Zusammenhang insbesondere, dass das Prägemuster des Vliesstoffes bzw. die Prägungen des Vliesstoffes für das menschliche Auge nicht wahrnehmbar ist/sind bzw. im Wesentlichen nicht wahrnehmbar ist/sind.

Es liegt im Rahmen der Erfindung, dass der kleinste Abstand d zweier Prägungen des Prägemusters jeweils 0,6 bis 2,5 mm, vorzugsweise 0,8 bis 2,0 mm, bevorzugt 0,9 bis 1,8 mm, besonders bevorzugt 0,95 bis 1,6 mm und ganz besonders bevorzugt 1,0 bis 1,5 mm beträgt. Zweckmäßigerweise beträgt der kleinste Abstand d zweier Prägungen des Prägemusters jeweils zumindest 0,6 mm, insbesondere zumindest 0,8 mm, bevorzugt zumindest 1,0 mm, besonders bevorzugt zumindest 1,4 mm und ganz besonders bevorzugt zumindest 2,0 mm. Kleinster Abstand d zweier Prägungen des Prägemusters meint dabei insbesondere den kleinsten Abstand d zweier unmittelbar benachbarter Prägungen des Prägemusters, also bevorzugt den kleinsten Abstand einer Prägung zur der ihr nächstgelegenen Prägung des Prägemusters. Darüber hinaus bezieht sich der kleinste Abstand d zweier Prägungen des Prägemusters insbesondere auf den kleinsten Abstand zwischen den Prägungsbegrenzungen zweier Prägungen, also auf den kleinsten Abstand der beiden Prägungen entlang der dazwischenliegenden nicht-geprägten Fläche des Vliesstoffes. Dieser Ausführungsform liegt die Erkenntnis zugrunde, dass dadurch die optische Wahrnehmbarkeit des Prägemusters aus Prägungen weiter reduziert werden kann, wobei nichtsdestoweniger vorteilhafte mechanische Eigenschaften und eine ausreichende Dicke des Vliesstoffes sichergestellt sind. Der vorstehend beschriebene kleinste Abstand zweier Prägungen des Prägemusters bezieht sich bevorzugt auf zumindest 95%, vorzugsweise auf zumindest 97% aller Prägungen des Vliesstoffes. Besonders bevorzugt bezieht sich der beschriebene kleineste Abstand zweier Prägungen auf alle Prägungen des Vliesstoffes.

Erfindungsgemäß beträgt der Anteil der Gesamtprägefläche des Prägemusters an der Gesamtoberfläche des Vliesstoffes 2,5 bis 8%, bevorzugt 3 bis 6%, besonders bevorzugt 3,5 bis 5,5% und ganz besonders bevorzugt 4 bis 5%. Es liegt im Rahmen der Erfindung, dass der Anteil der Gesamtprägefläche des Prägemusters an der Gesamtoberfläche des Vliesstoffes weniger als 10%, vorzugsweise weniger als 8%, bevorzugt weniger als 6,5%, besonders bevorzugt weniger als 5,5% und ganz besonders bevorzugt weniger als 5% beträgt. Durch diesen Anteil der Gesamtprägefläche des Prägemusters an der Gesamtoberfläche des Vliesstoffes kann die optische Wahrnehmbarkeit des Prägemusters aus Prägungen weiter reduziert werden. Nichtsdestoweniger resultiert ein Vliesstoff mit zufriedenstellenden mechanischen Eigenschaften. Gesamtprägefläche des Prägemusters meint in diesem Zusammenhang insbesondere die Summe aller Prägeflächen des Prägemusters. Gesamtoberfläche des Vliesstoffes meint im Rahmen der Erfindung insbesondere die gesamte Vliesstoffoberfläche einschließlich der geprägten und nicht-geprägten Bereiche.

Empfohlenermaßen weisen die Prägeflächen der Prägungen in der Draufsicht zumindest eine Geometrie ausgewählt aus der Gruppe: "punktförmig bzw. kreisförmig, ellipsenförmig, quadratisch, rechteckig, rautenförmig, mehreckig, linienförmig, wellenförmig" auf. Wie bereits oben stehend beschrieben wurde, meint Prägefläche einer Prägung insbesondere die geprägte Fläche einer Prägung ohne den die Prägefläche gegebenenfalls umgebenden Materialüberstand bzw. die Materialwulst. Es ist bevorzugt, dass die Prägeflächen bzw. die Prägungen des Prägemusters jeweils die gleiche bzw. im Wesentlichen die gleiche Geometrie aufweisen. Es liegt grundsätzlich aber auch im Rahmen der Erfindung, dass das Prägemuster Prägeflächen bzw. Prägungen unterschiedlicher Geometrie aufweist. Eine ganz besonders bevorzugte Ausführungsform der Erfindung ist dadurch gekennzeichnet, dass die Prägeflächen der Prägungen bzw. aller Prägungen in der Draufsicht punktförmig bzw. kreisförmig sind.

Es liegt weiterhin im Rahmen der Erfindung, dass das Aspektverhältnis der Prägefläche der Prägungen jeweils kleiner als 4, bevorzugt kleiner als 3, besonders bevorzugt kleiner als 2, beispielsweise gleich 1, ist. Aspektverhältnis der Prägefläche meint in diesem Zusammenhang insbesondere das Verhältnis der größten Länge bzw. Längserstreckung der Prägefläche einer Prägung zur größten Breite bzw. Breitenerstreckung der Prägefläche der Prägung und beispielsweise das Verhältnis der Längen der Symmetrieachsen. Im Falle einer in der Draufsicht punktförmigen bzw. kreisförmigen Geometrie der Prägefläche einer Prägung ist das Aspektverhältnis beispielsweise gleich 1. Im Falle einer in der Draufsicht ellipsenförmigen Geometrie der Prägefläche einer Prägung entspricht das Aspektverhältnis beispielsweise dem Verhältnis der Länge der Hauptachse bzw. großen Halbachse zur Länge der Nebenachse bzw. kleinen Halbachse der Ellipse. Im Falle einer in der Draufsicht rechteckförmigen Geometrie der Prägefläche einer Prägung entspricht das Aspektverhältnis beispielsweise dem Verhältnis der Länge des Rechtecks zur Breite des Rechtecks. Im Falle einer in der Draufsicht rautenförmigen Geometrie der Prägefläche einer Prägung entspricht das Aspektverhältnis beispielsweise dem Verhältnis der Länge der längeren Diagonalen zur Länge der kürzeren Diagonalen der Raute. Im Falle einer in der Draufsicht quadratischen Geometrie der Prägefläche einer Prägung ist das Aspektverhältnis gleich 1. Bei gekrümmten Linien beschreibt vorzugsweise das Aspektverhältnis des umschließenden Rechtecks das Aspektverhältnis der Prägefläche.

Es liegt grundsätzlich im Rahmen der Erfindung, dass die Fasern der zumindest einen Vliesbahn Kurzfasern sind bzw. dass die zumindest eine Vliesbahn Kurzfasern enthält. Gemäß bevorzugter Ausführungsform sind die Fasern der zumindest einen Vliesbahn Endlosfilamente. Besonders bevorzugt sind die Fasern aller Vliesbahnen des Vliesstoffes Endlosfilamente. Endlosfilamente unterscheiden sich aufgrund ihrer quasi endlosen Länge von Kurzfasern, die deutlich geringere Längen von beispielsweise 1 mm bis 60 mm aufweisen.

Wie vorstehend beschrieben sind gemäß besonders bevorzugter Ausführungsform der Erfindung die Fasern der zumindest einen Vliesbahn als Endlosfilamente ausgebildet. Vorzugsweise sind die Fasern der zumindest einen Vliesbahn bzw. zumindest einer Vliesbahn des Vliesstoffes als Endlosfilamente aus zumindest einem thermoplastischen Kunststoff, bevorzugt aus zumindest einem Polyolefin ausgebildet. Bei dem zumindest einen Polyolefin handelt es sich empfohlenermaßen um Polypropylen und/oder Polyethylen. Grundsätzlich können die Endlosfilamente auch aus anderen thermoplastischen Kunststoffen wie Polyestern, beispielsweise Polyethylenterephtalat (PET) und/oder Polylactid (PLA), sowie aus Mischungen der vorstehend genannten thermoplastischen Kunststoffe hergestellt sein. Gemäß einer Ausführungsform werden Copolymere der genannten thermoplastischen Kunststoffe eingesetzt. Den genannten thermoplastischen Kunststoffen können übliche Additive wie Weichmacher, Füllstoffe, Farben und dergleichen zudosiert sein. Es liegt im Rahmen der Erfindung, dass die Endlosfilamente der zumindest einen Vliesbahn bzw. zumindest einer Vliesbahn des Vliesstoffes als Spunbond-Endlosfilamente erzeugt sind. Es ist grundsätzlich auch möglich, dass die Endlosfilamente der zumindest einen Vliesbahn bzw. einer Vliesbahn des Vliesstoffes als Meltblown-Endlosfilamente erzeugt sind.

Gemäß besonders bevorzugter Ausführungsform der Erfindung sind die Fasern der zumindest einen Vliesbahn als gekräuselte Endlosfilamente ausgebildet, wobei die gekräuselten Endlosfilamente bevorzugt Multikomponentenfilamente, besonders bevorzugt Bikomponentenfilamente sind.

Es hat sich in diesem Zusammenhang besonders bewährt, dass die Multikomponentenfilamente bzw. Bikomponentenfilamente eine erste Komponente aufweisen, die aus zumindest einem thermoplastischen Kunststoff, insbesondere aus zumindest einem Polyolefin, vorzugsweise aus Polyethylen und/oder aus Polypropylen besteht bzw. im Wesentlichen besteht und/oder dass die Multikomponentenfilamente bzw. Bikomponentenfilamente eine zweite bzw. weitere Komponente aufweisen, die aus zumindest einem thermoplastischen Kunststoff, insbesondere aus zumindest einem Polyester und/oder aus Polypropylen besteht bzw. im Wesentlichen besteht. Als Polyester eignet sich insbesondere Polyethylenterephtalat (PET) und/oder Polylactid (PLA). Gemäß einer Ausführungsform werden Copolymere dieser Kunststoffe eingesetzt. Wenn hier oder nachfolgend in Bezug auf die Komponenten der Mehrkomponentenfilamente bzw. der Bikomponentenfilamente und insbesondere auf einen Kunststoff bzw. auf ein Polymer "im Wesentlichen besteht" angegeben wird, meint dies insbesondere, dass die Komponente bzw. das Polymer zu mindestens 95 Gew.-%, vorzugsweise zu mindestens 97 Gew.-% und bevorzugt zu mindestens 98 Gew.-% vorhanden ist. Die restlichen Gew.-% können insbesondere von Additiven wie Weichmachern, Füllstoffen, Farben und dergleichen gebildet werden.

Gemäß einer bevorzugten Ausführungsform der Erfindung ist die erste Komponente der Multikomponentenfilamente bzw. der Bikomponentenfilamente auf Basisvon Polyethylen ausgebildet und besteht vorzugsweise aus Polyethylen bzw. im Wesentlichen aus Polyethylen. Gemäß einer weiter bevorzugten Ausführungsform ist die erste Komponente der Multikomponentenfilamente bzw. Bikomponentenfilamente auf Basis von Polypropylen ausgebildet und besteht bevorzugt aus Polypropylen bzw. im Wesentlichen aus Polypropylen. Anstelle von Polypropylen oder zusätzlich zu Polypropylen kann im Rahmen der Erfindung im Übrigen auch zumindest ein Polypropylen-Copolymer eingesetzt werden.

Die zweite bzw. weitere Komponente der Multikomponentenfilamente bzw. Bikomponentenfilamente ist gemäß bevorzugter Ausführungsform der Erfindung auf Basis von zumindest einem Polyester und/oder auf Basis von Polypropylen ausgebildet. Besonders bevorzugt besteht die zweite bzw. weitere Komponente der Multikomponentenfilamente bzw. Bikomponentenfilamente aus zumindest einem Polyester und/oder aus Polypropylen. Für die zweite bzw. weitere Komponente kann anstelle von Polypropylen oder zusätzlich zu Polypropylen auch zumindest ein Polypropylen-Copolymer eingesetzt werden und vorzugsweise kann anstelle des Polyesters oder zusätzlich zu dem Polyester auch zumindest ein Polyester-Copolymer eingesetzt werden. Als Polyester eignen sich zweckmäßigerweise insbesondere Polyethylenterephtalat (PET) und/oder Polylactid (PLA) und als Polyester-Copolymer eignet sich insbesondere ein PET-Copolymer (Co-PET). Es liegt auch im Rahmen der Erfindung, dass als erste Komponente ein Polylactid-Copolymer (Co-PLA) und als zweite bzw. weitere Komponente Polylactid (PLA) verwendet wird.

Es liegt im Rahmen der Erfindung, dass die Endlosfilamente, vorzugsweise die gekräuselten Endlosfilamente, als Multikomponentenfilamente bzw. Bikomponentenfilamente mit Seite-an-Seite-Konfiguration und/oder mit Kern-Mantel-Konfiguration, insbesondere mit exzentrischer Kern-Mantel-Konfiguration, ausgebildet sind und das bevorzugt die vorstehend beschriebene erste Komponente die Mantelkomponente und zweckmäßigerweise die vorstehend beschriebene zweite bzw. weitere Komponente die Kernkomponente ist. Wenn die Endlosfilamente als Multikomponentenfilamente bzw. Bikomponentenfilamente mit Kern-Mantel-Konfiguration ausgebildet sind, ist es im Rahmen der Erfindung grundsätzlich auch möglich, dass es sich um eine zentrische Kern-Mantel-Konfiguration handelt.

Wenn die Endlosfilamente bzw. die gekräuselten Endlosfilamente gemäß bevorzugter Ausführungsform als Multikomponentenfilamente bzw. Bikomponentenfilamente mit exzentrischer Kern-Mantel-Konfiguration ausgebildet sind, liegt es im Rahmen der Erfindung, dass sowohl der Mantel der Filamente als auch der Kern der Filamente - im Filamentquerschnitt gesehen - kreisförmig ausgebildet ist. Gemäß einer weiteren bevorzugten Ausführungsform der Erfindung sind die Multikomponentenfilamente bzw. Bikomponentenfilamente als Multikomponentenfilamente bzw. Bikomponentenfilamente mit exzentrischer Kern-Mantel-Konfiguration ausgebildet und der Kern dieser Filamente ist - im Filamentquerschnitt gesehen - kreissegmentförmig ausgebildet und weist bezüglich seines Umfanges einen kreisbogenförmigen Umfangsabschnitt sowie einen linearen Umfangsabschnitt auf, sodass gleichsam eine D-Form des Kerns - im Filamentquerschnitt gesehen - resultiert.

Wenn die Endlosfilamente bzw. die gekräuselten Endlosfilamente im Rahmen der Erfindung als Multikomponentenfilamente bzw. Bikomponentenfilamente mit zumindest einer vorstehend beschriebenen ersten Komponente und zumindest einer vorstehend beschriebenen zweiten bzw. weiteren Komponente sind, ist es bevorzugt, dass die erste Komponente eine im Vergleich zu der zweiten Komponente niedrigerschmelzende Komponente ist. Bei der ersten bzw. niederigerschmelzenden Komponente handelt es sich bevorzugt um Polyethylen und/oder Polypropylen, insbesondere um Polyethylen. Gemäß bevorzugter Ausführungsform beträgt der Anteil der niedrigerschmelzenden ersten Komponente der Multikomponentenfilamente bzw. Bikomponentenfilamente der zumindest einen Vliesbahn des Vliesstoffes 20 bis 80 Gew.-%, vorzugsweise 25 bis 65 Gew.-%, bevorzugt 30 bis 50 Gew.-% - bezogen auf die Komponenten der Multikomponentenfilamente bzw. Bikomponentenfilamente. Die niedrigerschmelzende Komponente bzw. die niedrigerschmelzende erste Komponente der Mehrkomponentenfilamente bzw. Bikomponentenfilamente ist im Rahmen der Erfindung insbesondere eine Bindekomponente für die Mehrkomponentenfilamente bzw. Bikomponentenfilamente.

Gemäß besonders bevorzugter Ausführungsform des erfindungsgemäßen Vliesstoffes beträgt der Titer der Fasern des Vliesstoffes, insbesondere der Endlosfilamente bzw. der gekräuselten Endlosfilamente, 0,5 bis 6,0 den, bevorzugt 0,8 bis 5,0 den, besonders bevorzugt 1,0 bis 2,5 den.

Eine empfohlene Ausführungsform der Erfindung zeichnet sich dadurch aus, dass der Vliesstoff ein Flächengewicht von weniger als 200 g/m², insbesondere von weniger als 150 g/m², vorzugsweise von weniger als 100 g/m², bevorzugt von weniger als 75 g/m², besonders bevorzugt von weniger als 50 g/m² und ganz besonders bevorzugt von weniger als 30 g/m² aufweist. Es ist besonders bevorzugt, dass das Flächengewicht des Vliesstoffes 10 g/m² bis 80 g/m², vorzugsweise 15 g/m² bis 60 g/m², bevorzugt 15 g/m² bis 30 g/m² beträgt.

Es ist sehr bevorzugt, dass der Vliesstoff eine Dicke h von 0,1 bis 0,85 mm, vorzugsweise von 0,15 bis 0,75 mm, bevorzugt von 0,2 bis 0,65 mm, besonders bevorzugt von 0,25 bis 0,55 mm aufweist. Es liegt im Rahmen der Erfindung, dass der Vliesstoff eine Dicke h von zumindest 0,4 mm, insbesondere von zumindest 0,5 mm, vorzugsweise von zumindest 0,55 mm, bevorzugt von zumindest 0,6 mm, besonders bevorzugt von zumindest 0,625 mm aufweist. Dicke h meint dabei die größte Dicke bzw. Gesamtdicke des Vliesstoffes quer, insbesondere senkrecht bzw. im Wesentlichen senkrecht zu seiner flächigen Erstreckung in den nicht-geprägten Bereichen des Vliesstoffes. Die Dicke bzw. Gesamtdicke h des Vliesstoffes wird dabei nach der Methode WRT 120.6(05)-Option A gemessen.

Eine sehr bewährte Ausführungsform der Erfindung zeichnet sich dadurch aus, dass der Vliesstoff eine Abriebfestigkeit von zumindest Klasse 2 nach Martindale, vorzugsweise von Klasse 1 nach Martindale aufweist und/oder dass der Vliesstoff eine maximale Biegesteifigkeit mit einem Cantilever von maximal 100 mm, vorzugsweise von maximal 90 mm, bevorzugt von maximal 80 mm, besonders bevorzugt von maximal 75 mm und ganz besonders bevorzugt von maximal 70 mm aufweist. Dieser Ausführungsform liegt die Erkenntnis zugrunde, dass sich der Vliesstoff dann durch eine sehr zufriedenstellende Abriebfestigkeit auszeichnet und/oder dass der Vliesstoff eine vorteilhaft geringe Biegesteifigkeit und insbesondere auch eine im Vergleich zu den bekannten Maßnahmen bzw. Vliesstoffen verbesserte Drapierbarkeit aufweist. Diese Eigenschaften resultieren bei dem erfindungsgemäßen Vliesstoff insbesondere in vorteilhafter Kombination mit einer zufriedenstellenden mechanischen Festigkeit und einer zumindest deutlich reduzierten optischen Wahrnehmbarkeit des Prägemusters aus Prägungen. Die Abriebfestigkeit des Vliesstoffes wird im Rahmen der Erfindung insbesondere mit einem Martindale Abrieb-Testgerät nach folgender Testmethode bestimmt:
Es wird als Testgerät insbesondere das Gerät "SDL Atlas M235 Martindale Tester" verwendet. Das Vorgehen zur Ermittlung der Abriebfestigkeit basiert vorzugsweise auf WSP20.5(05), wobei insbesondere die folgenden Abweichungen zu WSP20.5(05) vorgesehen werden: Die Oberfläche (oben/unten) wird separat geprüft; mindestens 10, bevorzugt mindestens 20 Prüfungen werden pro Muster und Oberfläche durchgeführt, wobei die Prüflinge gleichmäßig aus der Fläche der Probe gewonnen werden, das Endergebnis ist der arithmetische Mittelwert. Die Prüflinge sind aus einer repräsentativen Position zu gewinnen, also beispielsweise nicht alleine vom Rand, da der Test bzw. die Abweichungen im Ergebnis nicht durch makroskopische Abweichungen, wie durch schlechte Prozesskontrolle, sondern nur von typischen (lokalen) Schwankungen beeinflusst werden soll; die getestete Probe wird auf Standardfilz gespannt und im unteren Halter montiert; als bewegte obere Reibfläche wird der gleiche Vliesstoff verwendet mit der zu testenden Seite gegeneinander, dieses Stück wird zusammen mit dem PU-Schaumstoffflicken (z.B. von SDL Atlas) befestigt; 9 kPa Andruck; 32 Zyklen, das heißt zwei volle Runden der Lissajous Figur; nach jeder der Prüfungen werden das Paar (Prüfling und obere Reibfläche) ausgetauscht;
die Proben werden mit den Noten 1 bis 5 bewertet, wobei 1 die Bestnote ist. Wenn beispielsweise der Mittelwert auf der Oberseite eine 1 und auf der Unterseite eine 3 ergibt, wird die Probe insgesamt mit 1 bewertet. Bewertet werden nur die Veränderungen im Vlies, wenn das Vlies vorher ähnliche Defekte aufweist sind diese zu übersehen. Hier sind etwa Fasersträhnen - Gruppen oder Bündel von Fasern auf der Oberfläche - gemeint. Weist ein Prüfling diese Fehler von vornherein deutlich auf, so ist der Prüfling im Zweifel auszuschließen.

Note 1: Praktisch keine Veränderung von oben betrachtet. Die Oberfläche darf leicht angelöst werden, dabei dürfen die Filamente sich nur lockern und keine größeren bzw. längeren Zusammenballungen erzeugen. Von der Seite betrachtet darf die Florhöhe der losen Filamente 5 mm nicht überschreiten. Einzelne Filamente bzw. Filamente dürfen zu einem kleinen Ball <2 mm Durchmesser zusammengeschoben werden.

Note 2: zusätzlich zu dem oberen Schadensbild (Note 1): Filamente werden gelockert und mit Nachbarfilamenten zu einem länglichen Agglomerat verfilzt. Diese Filamentgruppen werden "Strähnen" oder "string bzw. bundle" genannt. Diese Strähnen sind 5 bis 40 mm lang und mind. alle 10 mm Länge mit dem Untergrund verbunden. Eine Strähne ist max. 5 mm hoch (steht 5 mm über der Oberfläche) und max. 2 mm breit.

Note 3: Die obigen "Strähnen" sind nicht mehr entlang ihrer Länge mit dem Untergrund verbunden - mögliche Verbindungen sind >10 mm untereinander entfernt bzw. die Strähnen hier sind nur noch am Start- und Endpunkt mit der Probe verbunden. Es ist möglich, diese Strähne z.B. mit einer Nadel anzuheben und zu verschieben.

Note 4: Die Strähnen sind mit Nachbarsträhnen zu einem Netzwerk verbunden. "Spinnennetz" (spider web).

Note 5: Die Probe ist weiter zerstört, erste Lochbildung ist aufgetreten.

Die Biegesteifigkeitdes Vliesstoffes wird im Rahmen der Erfindung insbesondere nach der Methode "WSP 90.1(05) Standard Test Method for Stiffness of Nonwoven: Fabrics Using the Cantilever Test" ermittelt.

Es liegt im Rahmen der Erfindung, dass die Festigkeit des Vliesstoffes in Maschinenrichtung (MD-Richtung) zumindest 8 N/5 cm, insbesondere zumindest 10 N/5 cm, vorzugsweise zumindest 15 N/5 cm, bevorzugt zumindest 17,5 N/5 cm, besonders bevorzugt zumindest 20 N/5 cm, ganz besonders bevorzugt zumindest 22,5 N/5 cm beträgt. Maschinenrichtung (MD-Richtung) meint im Rahmen der Erfindung insbesondere die Förderrichtung F des Vliesstoffes auf der Ablageeinrichtung. Die Festigkeit des Vliesstoffes in Maschinenrichtung wird im Rahmen der Erfindung insbesondere nach der folgenden Methode bestimmt: "Determination of tensile strength (based on Edana 20.2-89)": in N/5 cm; mit 50 mm Probenbreite; 100 mm Einspannlänge; 200 mm/min Prüfgeschwindigkeit.

Gemäß einer besonders bevorzugten Ausführungsform der Erfindung beträgt die Tiefe t der Prägungen jeweils 0,1 bis 0,8 mm, bevorzugt 0,15 bis 0,7 mm, besonders bevorzugt 0,2 bis 0,6 mm, ganz besonders bevorzugt 0,25 bis 0,5 mm. Tiefe t der Prägungen meint dabei insbesondere den Dickenunterschied zwischen der Dicke bzw. Gesamtdicke h des Vliesstoffes und der Dicke des Vliesstoffes im Bereich der Prägefläche einer Prägung. Die Gesamtdicke h des Vliesstoffes wird dabei insbesondere nach der oben stehend beschriebenen Methode ermittelt. Die Dicke des Vliesstoffes im Bereich der Prägefläche einer Prägung kann im Rahmen der Erfindung beispielsweise durch optische bzw. mikroskopische Analyse eines Querschnittes des Vliesstoffes erfolgen. Dies ist beispielsweise durch Eingiessen einer Probe mit Querschnitt durch den Prägepunkt und einer Politur der Schnittfläche möglich. In dieser Schnittfläche kann dann die Dicke der Prägefläche von der Seite mit einem typischen Mikroskop bestimmt werden. Bei leichteren Flächengewichten kann die Prägefläche porös sein, hier ist dann bevorzugt die Dicke nur in den ausgebildeten Partien zu bestimmen. Zusätzlich oder alternativ ist ein Mikro-Computertomographie(µCT)-Scan geeignet, der die Bestimmung der mittleren Dicke der Prägefläche erlaubt.

Es liegt im Rahmen der Erfindung, dass der Vliesstoff lediglich eine Vliesbahn bzw. lediglich eine Vliesstofflage aufweist. Bei der Vliesbahn bzw. der Vliesstofflage kann es sich beispielsweise um eine Vliesbahn aus Endlosfilamenten, insbesondere aus gekräuselten Endlosfilamenten handeln. Gemäß bevorzugter Ausführungsform ist der Vliesstoff als Vlieslaminat aus zumindest zwei, insbesondere aus zumindest zwei vorstehend beschriebenen, Vliesbahnen bzw. Vliesstofflagen ausgebildet. Es ist bevorzugt, dass die Fasern der zumindest zwei Vliesbahnen bzw. Vliesstofflagen, insbesondere die Fasern aller Vliesbahnen bzw. Vliesstofflagen des Vliesstoffes, Endlosfilamente bzw. gekräuselte Endlosfilamente sind. Grundsätzlich kann der Vliesstoff aber auch Vliesbahnen bzw. Vliesstofflagen mit Fasern aus nicht-gekräuselten Endlosfilamenten oder aus Kurzfasern aufweisen. Es hat sich bewährt, dass die Fasern zumindest einer einer Außenoberfläche des Vliesstoffes zugeordneten Vliesbahn bzw. Vliesstofflage gekräuselte Endlosfilamente und/oder Kurzfasern sind. Dadurch kann insbesondere die Weichheit des Vliesstoffes verbessert und die Biegesteifigkeit reduziert werden. Es ist außerdem möglich, dass sich die Eigenschaften der Fasern bzw. Endlosfilamente der verschiedenen Vliesbahnen bzw. Vliesstofflagen des Vliesstoffes unterscheiden. Beispielsweise können die Endlosfilamente einer ersten Vliesbahn einen geringeren mittleren Titer aufweisen als die Endlosfilamente einer zweiten Vliesbahn, sodass gleichsam ein Titergradient resultiert.

Gemäß einer bevorzugten Ausführungsform der Erfindung handelt es sich bei dem Vliesstoff um einen Spunbond-Vliesstoff mit zumindest einer Spunbond-Vliesbahn bzw. mit zumindest einer Spunbond-Vlieststofflage. Es ist möglich, dass der Vliesstoff als Vlieslaminat aus zumindest zwei Spunbond-Vliesbahnen bzw. zumindest zwei Spunbond-Vliesstofflagen ausgebildet ist. Es ist aber auch möglich, dass das Vlieslaminat zumindest eine Meltblown-Vliesstofflage bzw. Meltblown-Vliesbahn aufweist. Es liegt weiterhin im Rahmen Erfindung, dass der Vliesstoff als Vlieslaminat aus zumindest drei, beispielsweise aus zumindest vier Vliesbahnen bzw. Vliesstofflagen ausgebildet ist. Die einzelnen Vliesbahnen bzw. Vliesstofflagen können jeweils als Spunbond-Vliesbahnen bzw. Vliesstofflagen ausgebildet sein. Grundsätzlich könnte das Vlieslaminat aber auch zumindest eine Meltblown-Vliesbahn bzw. Meltblown-Vliesstofflage aufweisen. Die Spunbond-Vliesbahnen bzw. die Spunbond-Vliesstofflagen sind bevorzugt jeweils aus Endlosfilamenten bzw. gekräuselten Endlosfilamenten ausgebildet.

Eine bewährte Ausführungsform der Erfindung ist dadurch gekennzeichnet, dass der Vliesstoff mit zumindest einer Kalanderwalze zur Erzeugung des Prägemusters und vorzugsweise mit zumindest einer Heißfluid-Hauptverfestigungseinrichtung, insbesondere mit zumindest einer Heißluft-Hauptverfestigungseinrichtung, verfestigt ist. Die zumindest eine Kalanderwalze ist vorzugsweise Teil eines Kalanders, der bevorzugt zumindest zwei Kalanderwalzen bzw. zumindest ein Kalanderwalzepaar umfasst. Wenn der Vliesstoff gemäß bevorzugter Ausführungsform mit zumindest einer Kalanderwalze zur Erzeugung des Prägemusters und mit zumindest einer Heißfluid-Hauptverfestigungseinrichtung verfestigt ist, resultiert insbesondere ein Vliesstoff, der sich durch vorteilhafte optische Eigenschaften, eine besonders vorteilhafte mechanische Festigkeit und gleichzeitig durch eine vorteilhaft niedrige Biegesteifigkeit und eine zufriedenstellende Abriebfestigkeit auszeichnet.

Mit dem Begriff Heißfluid ist im Rahmen der Erfindung ein temperiertes bzw. erhitztes Fluid gemeint. Bevorzugt handelt es sich bei dem Heißfluid um ein temperiertes bzw. erhitztes Gas und besonders bevorzugt um Heißluft. Grundsätzlich kann es sich bei dem Heißfluid aber auch um eine temperierte bzw. erhitzte Flüssigkeit, beispielsweise um Wasser handeln.

Die Erfindung betrifft außerdem die Verwendung eines vorstehend beschriebenen Vliesstoffes für zumindest ein Hygieneprodukt bzw. in zumindest einem Hygieneartikel.

Zur Lösung des technischen Problems lehrt die Erfindung weiterhin eine Vorrichtung zur Herstellung eines Vliesstoffes mit zumindest einer Vliesbahn aus Fasern, zur Herstellung eines vorstehend beschriebenen Vliesstoffes, wobei die Vorrichtung zumindest eine Fasererzeugungseinrichtung, insbesondere zumindest einen Spinnbalken, und zumindest eine Ablageeinrichtung, insbesondere zumindest ein Ablagesiebband, für die Ablage der Fasern zur Vliesbahn aufweist und wobei weiterhin zumindest eine Kalanderwalze zur Einbringung eines Prägemusters aus einer Vielzahl von Prägungen in dem Vliesstoff vorgesehen ist, wobei die Kalanderwalze dazu ein Komplementärprägemuster aus Prägeelementen aufweist, wobei die Prägeelemente jeweils eine Pressfläche von 0,07 bis 0,18 mm², besonders bevorzugt von 0,08 bis 0,15 mm² und ganz besonders bevorzugt von 0,09 bis 0,12 mm² aufweisen.

Es liegt im Rahmen der Erfindung, dass die Prägeelemente des Komplementärprägemusters der zumindest einen Kalanderwalze jeweils eine Prägehöhe im Bereich von 0,3 bis 1,2 mm, bevorzugt von 0,4 bis 0,9 mm, besonders bevorzugt von 0,5 mm bis 0,8 mm aufweisen. Prägehöhe meint dabei insbesondere den Höhenunterschied zwischen der Pressfläche eines Prägeelementes und dem Grund der Kalanderwalze. Dieser Ausführungsform liegt die Erkenntnis zugrunde, dass bei einem Kalandrierungsvorgang mit einer solchen Kalanderwalze eine Kompaktierung des Vliesstoffes zumindest weitgehend minimiert werden kann.

Zweckmäßigerweise ist das Ablagesiebband der erfindungsgemäßen Vorrichtung ein endlos umlaufendes Ablagesiebband. Es liegt im Rahmen der Erfindung, dass die Kalanderwalze Teil eines Kalanders ist. Der Kalander ist bevorzugt der Ablageeinrichtung bzw. dem Ablagesiebband in Förderrichtung F des Vliesstoffes nachgeschaltet. Der Kalander weist gemäß besonders bevorzugter Ausführungsform zumindest ein Kalanderwalzenpaar auf und zumindest eine, insbesondere eine, der beiden Kalanderwalzen des Kalanders bzw. des Kalanderwalzenpaares ist eine vorstehend beschriebene Kalanderwalze zur Einbringung eines Prägemusters aus Prägungen in den Vliesstoff. Die andere bzw. weitere Walze des Kalanders bzw. des Kalanderwalzenpaares ist zweckmäßigerweise eine Glattwalze mit einer glatten Außenoberfläche. Vorzugsweise wird der Vliesstoff im Rahmen der Erfindung somit mit einem Kalander verfestigt, der zumindest eine vorstehend beschriebene Kalanderwalze zur Einbringung eines Prägemusters aus einer Vielzahl von Prägungen in den Vliesstoff und zumindest eine Glattwalze aufweist. Dann wird das Prägemuster bevorzugt lediglich von einer Vliesstoffseite aus in den Vliesstoff eingebracht. Bevorzugt ist das Prägemuster dann aber nichtsdestoweniger in dem resultierenden Vliesstoff auf beiden Vliesstoffseiten vorhanden, wobei sich die Prägetiefe insbesondere unterschiedlich auf die beiden Vliesstoffseiten verteilt.

Pressfläche meint im Rahmen der Erfindung insbesondere die für die Erzeugung der Prägefläche der Prägungen vorgesehene Fläche der Prägeelemente der Kalanderwalze. Wenn die Prägeelemente der Kalanderwalze beispielsweise als zylinderförmige Prägeelemente zur Erzeugung einer Prägefläche mit in der Draufsicht punktförmiger bzw. kreisförmiger Geometrie ausgebildet sind, entspricht die Pressfläche der Prägeelemente insbesondere der Fläche der Zylinderoberseite. Wenn die Prägeelemente der Kalanderwalze zur Erzeugung einer Prägung mit einer Prägefläche mit in der Draufsicht punktförmiger bzw. kreisförmiger Geometrie beispielsweise kegelstumpfförmig - also mit Flankenwinkel - ausgebildet sind, entspricht die Pressfläche der Prägeelemente insbesondere der Deckfläche des Kegelstumpfes. Eine Ausführungsform der Erfindung nutzt für die Prägeelemente mehrere Flankenwinkel, wobei die Prägeelemente bevorzugt in dem für den Kontakt mit dem Vliesstoff vorgesehenen Bereich kleinere Flankenwinkel aufweisen als weiter in Richtung des Grundes der Kalanderwalze. Die Flankenwinkelabstufung kann dabei stufenweise oder kontinuierlich erfolgen.

Die zumindest eine Kalanderwalze zur Einbringung eines Prägemusters aus einer Vielzahl von Prägungen in den Vliesstoff ist im Rahmen der Erfindung vorzugsweise mit der Maßgabe ausgebildet, dass die oben stehend beschriebenen Eigenschaften der Prägungen - insbesondere hinsichtlich der Prägefläche und/oder hinsichtlich des kleinsten Abstandes d zwischen zwei Prägungen und/oder hinsichtlich der Tiefe t der Prägungen und/oder hinsichtlich des Anteils der Gesamtprägefläche des Prägemusters an der Gesamtoberfläche des Vliesstoffes und/oder hinsichtlich des Aspektverhältnisses der Prägefläche der Prägungen - damit realisiert werden können.

Es liegt im Rahmen der Erfindung, dass die zumindest eine Fasererzeugungseinrichtung bzw. der zumindest eine Spinnbalken zur Erzeugung einer Spunbond-Vliesbahn aus Endlosfilamenten, insbesondere aus gekräuselten Endlosfilamenten, ausgebildet ist. Wenn der Vliesstoff gemäß einer Ausführungsform der Erfindung als Vlieslaminat aus zumindest zwei Vliesstofflagen bzw. Vliesbahnen ausgebildet ist, liegt es im Rahmen der Erfindung, dass zumindest zwei Fasererzeugungseinrichtungen, insbesondere zumindest zwei Spinnbalken vorhanden sind und dass vorzugsweise alle Fasererzeugungseinrichtungen bzw. Spinnbalken zur Erzeugung von Spunbond-Vliesbahnen aus Endlosfilamenten, insbesondere aus gekräuselten Endlosfilamenten, ausgeführt sind. Ganz besonders bevorzugt ist die zumindest eine Fasererzeugungseinrichtung bzw. der zumindest eine Spinnbalken, vorzugsweise alle Fasererzeugungseinrichtungen bzw. alle Spinnbalken der erfindungsgemäßen Vorrichtung, zur Erzeugung von Multikomponentenfilamenten bzw. Bikomponentenfilamenten eingerichtet. Es liegt weiterhin im Rahmen der Erfindung, dass die Vorrichtung zur Herstellung zumindest einer Vliesbahn aus gekräuselten Endlosfilamenten ausgebildet ist. Vorzugsweise ist zumindest eine Fasererzeugungseinrichtung bzw. zumindest ein Spinnbalken zur Erzeugung von gekräuselten Endlosfilamenten eingerichtet. Bei Einsatz mehrerer Spinnbalken für die erfindungsgemäße Vorrichtung ist zumindest ein Spinnbalken oder sind zumindest zwei Spinnbalken oder sind alle Spinnbalken für die Erzeugung von gekräuselten Endlosfilamenten eingerichtet.

Eine sehr zweckmäßige Ausgestaltung der Erfindung ist dadurch gekennzeichnet, dass für die mit zumindest einer Fasererzeugungseinrichtung bzw. mit zumindest einem Spinnbalken ersponnenen Fasern bzw. Endlosfilamente zumindest eine Kühlvorrichtung zur Kühlung der Fasern bzw. Filamente sowie zumindest eine an die Kühlvorrichtung anschließende Verstreckeinrichtung zur Verstreckung der Fasern bzw. Filamente vorgesehen ist. Vorteilhafterweise schließt an die Verstreckeinrichtung in Strömungsrichtung der Fasern bzw. der Filamente zumindest ein Diffusor an. Eine sehr empfohlene Ausführungsform der Erfindung ist dadurch gekennzeichnet, dass das Aggregat aus der Kühlvorrichtung und der Verstreckeinrichtung als geschlossenes Aggregat ausgebildet ist und dass in dieses Aggregat außer der Zufuhr von Kühlluft in der Kühlvorrichtung keine weitere Luft von außen zugeführt wird. Zweckmäßigerweise werden die den Diffusor verlassenden Fasern bzw. Filamente unmittelbar auf der Ablageeinrichtung bzw. auf dem Ablagesiebband abgelegt.

Eine besonders bevorzugte Ausführungsform der erfindungsgemäßen Vorrichtung ist dadurch gekennzeichnet, dass die Vorrichtung zumindest eine Heißfluid-Hauptverfestigungseinrichtung, insbesondere eine Heißluft-Hauptverfestigungseinrichtung, aufweist, wobei die Heißfluid-Hauptverfestigungseinrichtung in Förderrichtung F des Vliesstoffes vorzugsweise hinter der Kalanderwalze angeordnet ist. Die zumindest eine Heißfluid-Hauptverfestigungseinrichtung ist somit gemäß bevorzugter Ausführungsform in Förderrichtung F des Vliesstoffes hinter der erfindungsgemäßen Kalanderwalze zur Einbringung eines Prägemusters aus Prägungen in den Vliesstoff und insbesondere nach einem diese Kalanderwalze aufweisenden Kalander angeordnet. Bei der Heißfluid-Hauptverfestigungseinrichtung bzw. Heißluft-Hauptverfestigungseinrichtung kann es sich insbesondere um einen Heißluftofen zur Verfestigung bzw. Hauptverfestigung des Vliesstoffes handeln.

Es hat sich im Rahmen der Erfindung besonders bewährt, dass die zumindest eine Heißfluid-Hauptverfestigungseinrichtung bzw. die zumindest eine Heißluft-Hauptverfestigungseinrichtung, als Heißluftofen, besonders bevorzugt als Omega-Ofen und/oder als Mehrtrommelofen und/oder als Einzelbandofen und/oder als Doppelbandofen ausgebildet ist. Zweckmäßigerweise erfolgt die Verfestigung bzw. Hauptverfestigung mit der zumindest einen Heißfluid-Hauptverfestigungseinrichtung durch einseitige oder beidseitige Beaufschlagung des Vliesstoffes mit zumindest einem Heißfluid in der zumindest einen Heißfluid-Hauptverfestigungseinrichtung. Wenn die Heißfluid-Hauptverfestigungseinrichtung, insbesondere die Heißluft-Hauptverfestigungseinrichtung, gemäß bevorzugter Ausführungsform ein Heißluftofen ist, dann entspricht die Fluidtemperatur im Übrigen im Rahmen der Erfindung insbesondere der Temperatur der Heißluft bei dieser Heißluftverfestigung in dem Heißluftofen. Grundsätzlich kann die zumindest eine Heißfluid-Hauptverfestigungseinrichtung im Übrigen auch in Förderrichtung F des Vliesstoffes vor der Kalanderwalze bzw. einem die Kalanderwalze aufweisenden Kalander angeordnet sein.

Es hat sich bewährt, dass die Vorrichtung zumindest eine Vorverfestigungseinrichtung, insbesondere zumindest eine Heißfluid-Vorverfestigungseinrichtung, bevorzugt zumindest eine Heißluft-Vorverfestigungseinrichtung, aufweist, wobei die Vorverfestigungseinrichtung besonders bevorzugt in Förderrichtung F des Vliesstoffes vor der Kalanderwalze, insbesondere vor einem die Kalanderwalze aufweisenden Kalander bzw. Kalanderwalzenpaar, angeordnet ist und ganz besonders bevorzugt der zumindest einen Fasererzeugungseinrichtung bzw. dem zumindest einen Spinnbalken nachgeschaltet bzw. unmittelbar nachgeschaltet ist. Vorzugsweise ist die zumindest eine Vorverfestigungseinrichtung dann in Förderrichtung F des Vliesstoffes auch vor der bevorzugt vorgesehenen Heißfluid-Hauptverfestigungseinrichtung angeordnet.

Es liegt im Rahmen der Erfindung, dass die Vorverfestigungseinrichtung bzw. die Heißfluid-Vorverfestigungseinrichtung oberhalb der Ablageeinrichtung bzw. des Ablagesiebbandes angeordnet ist. Es liegt im Übrigen im Rahmen der Erfindung, dass die zumindest eine Heißluft-Vorverfestigungseinrichtung in Form zumindest eines Heißluftmessers und/oder in Form zumindest eines Heißluftfeldes ausgebildet ist. Grundsätzlich kann die Vorverfestigungseinrichtung aber auch zumindest eine Walze bzw. eine Glattwalze, insbesondere ein Walzenpaar bzw. Glattwalzenpaar, sein. Wenn die erfindungsgemäße Vorrichtung zumindest zwei Fasererzeugungseinrichtungen bzw. zumindest zwei Spinnbalken aufweist, liegt es im Rahmen der Erfindung, dass jeder Fasererzeugungseinrichtung bzw. jedem der Spinnbalken in Förderrichtung F des Vliesstoffes zumindest eine Vorverfestigungseinrichtung, insbesondere zumindest eine Heißfluid-Vorverfestigungseinrichtung bzw. Heißluft-Vorverfestigungseinrichtung nachgeschaltet bzw. unmittelbar nachgeschaltet ist und dass zweckmäßigerweise die Heißluft-Vorverfestigungseinrichtungen jeweils in Form eines Heißluftmessers und/oder in Form eines Heißluftfeldes ausgebildet sind. Wenn der Vliesstoff gemäß einer Ausführungsform mit lediglich einer Vliesbahn hergestellt wird, ist es bevorzugt, dass als Vorverfestigungseinrichtung ein Heißluftmesser verwendet wird. Wenn der Vliesstoff gemäß bevorzugter Ausführungsform mit mehreren Vliesbahnen bzw. Vliesstofflagen hergestellt wird, wird vorzugsweise für die oberste bzw. zuletzt abgelegte Vliesbahn bzw. Vliesstofflage ein Heißluftmesser als Vorverfestigungseinrichtung verwendet und für die übrigen Vliesbahnen bzw. Vliesstofflagen wird insbesondere ein Heißluftmesser und ein Heißluftfeld als Vorverfestigungseinrichtung eingesetzt.

Zur Lösung des technischen Problems lehrt die Erfindung weiterhin ein Verfahren zur Herstellung eines Vliesstoffes mit zumindest einer Vliesbahn aus Fasern, insbesondere zur Herstellung eines vorstehend beschriebenen Vliesstoffes und/oder mit einer vorstehend beschriebenen Vorrichtung, wobei Fasern mit zumindest einer Fasererzeugungseinrichtung, insbesondere mit zumindest einem Spinnbalken, erzeugt werden, wobei die Fasern anschließend auf zumindest einer Ablageeinrichtung, insbesondere auf zumindest einem Ablagesiebband, zur Vliesbahn abgelegt werden, wobei die Vliesbahn bzw. der Vliesstoff anschließend mit zumindest einer Kalanderwalze verfestigt wird und wobei mittels der Kalanderwalze ein Prägemuster aus einer Vielzahl von Prägungen in den Vliesstoff eingebracht wird, wobei die Prägungen jeweils eine Prägefläche von 0,07 bis 0,18 mm², besonders bevorzugt von 0,08 bis 0,15 mm² und ganz besonders bevorzugt von 0,09 bis 0,12 mm² aufweisen und wobei der Anteil der Gesamtprägefläche des Prägemusters an der Gesamtoberfläche des Vliesstoffes 2,5 bis 8% beträgt.

Es liegt im Rahmen des erfindungsgemäßen Verfahrens, dass der Vliesstoff - vorzugsweise im Anschluss an die Verfestigung mit der zumindest einen Kalanderwalze, insbesondere mit zumindest einem die Kalanderwalze aufweisenden Kalander bzw. Kalanderwalzenpaar, - mit zumindest einer Heißfluid-Hauptverfestigungseinrichtung, insbesondere mit zumindest einer Heißluft-Hauptverfestigungseinrichtung verfestigt, insbesondere hauptverfestigt, wird.

Gemäß bevorzugter Ausführungsform des erfindungsgemäßen Verfahrens wird der Vliesstoff nach der Ablage auf der Ablageeinrichtung, insbesondere auf dem Ablagesiebband, zunächst mit zumindest einer Vorverfestigungseinrichtung, insbesondere mit zumindest einer Heißfluid-Vorverfestigungseinrichtung, vorzugsweise mit zumindest einer Heißluft-Vorverfestigungseinrichtung vorverfestigt, vorzugsweise anschließend mit der zumindest einen erfindungsgemäßen Kalanderwalze verfestigt und darauffolgend mit einer Heißfluid-Hauptverfestigungseinrichtung bzw. Heißluft-Hauptverfestigungseinrichtung verfestigt, insbesondere hauptverfestigt. Es ist auch möglich, dass der Vliesstoff nach der Vorverfestigung zunächst mit einer Heißfluid-Hauptverfestigungseinrichtung verfestigt bzw. vorverfestigt wird und anschließend mit der zumindest einen erfindungsgemäßen Kalanderwalze verfestigt wird. Vorverfestigung meint im Rahmen der Erfindung insbesondere eine Verfestigung des Vliesstoffes bzw. einer Vliesbahn, die die Transportfähigkeit sicherstellt, aber vorzugsweise zu einem geringeren Verfestigungsgrad des Vliesstoffes führt als eine Verfestigung bzw. Hauptverfestigung.

Wenn gemäß bevorzugter Ausführungsform ein Vliesstoff mit zumindest zwei Vliesbahnen bzw. Vliesstofflagen erzeugt wird bzw. wenn eine Vorrichtung mit zumindest zwei Fasererzeugungseinrichtungen bzw. mit zumindest zwei Spinnbalken vorgesehen ist, wird bevorzugt von dem zumindest einen ersten Spinnbalken zunächst eine erste Vliesbahn erzeugt und auf der Ablageeinrichtung, insbesondere auf dem Ablagesiebband, abgelegt und insbesondere mit einer ersten Vorverfestigungseinrichtung bzw. Heißfluid-Vorverfestigungseinrichtung vorverfestigt. Bevorzugt wird anschließend eine zweite Vliesbahn, die durch die zweite Fasererzeugungseinrichtung bzw. den zweiten Spinnbalken erzeugt wird, auf der ersten Vliesbahn abgelegt und die zweite Vliesbahn bzw. das Aggregat aus der ersten Vliesbahn und der zweiten Vliesbahn wird anschließend mit zumindest einer weiteren Vorverfestigungseinrichtung bzw. Heißfluid-Vorverfestigungseinrichtung vorverfestigt. Bevorzugt wird der Vliesstoff anschließend von der Ablageeinrichtung abgelöst und einem die zumindest eine erfindungsgemäße bzw. vorstehend beschriebene Kalanderwalze aufweisenden Kalander zugeführt. Mittels der Kalanderwalze des Kalanders wird zweckmäßigerweise ein Prägemuster aus einer Vielzahl von Prägungen in den Vliesstoff eingebracht und der Vliesstoff wird dabei vorzugsweise verfestigt. Zweckmäßigerweise wird der Vliesstoff anschließend mit einer Heißfluid-Hauptverfestigungseinrichtung bzw. Heißluft-Hauptverfestigungseinrichtung verfestigt bzw. hauptverfestigt.

Es liegt im Rahmen der Erfindung, dass die Oberflächentemperatur der zumindest einen Kalanderwalze, insbesondere des die Kalanderwalze aufweisenden Kalanders bzw. Kalanderwalzenpaares höher ist, insbesondere um 1°C bis 15°C, bevorzugt um 1°C bis 5°C höher ist, als die Temperatur des Heißfluides der zumindest einen Heißfluid-Hauptverfestigungseinrichtung oder niedriger ist als die Temperatur des Heißfluides der zumindest einen Heißfluid-Hauptverfestigungseinrichtung oder identisch bzw. im Wesentlichen identisch zu der Temperatur des Heißfluides der zumindest einen Heißfluid-Hauptverfestigungseinrichtung ist. Im Rahmen der Erfindung handelt es sich bei der zumindest einen Kalanderwalze, insbesondere bei dem zumindest einen die Kalanderwalze aufweisenden Kalander bzw. Kalanderwalzenpaar, bevorzugt um eine beheizte Kalanderwalze bzw. um einen beheizten Kalander.

Es ist im Rahmen der Erfindung außerdem möglich, dass die Fluidtemperatur der zumindest einen Heißfluid-Hauptverfestigungseinrichtung in Bezug auf den Schmelzpunkt Tm einer oben stehend beschriebenen ersten, niedrigerschmelzenden Komponente der Multikomponentenfilamente bzw. Bikomponentenfilamente in einem Bereich von Tm-5°C bis Tm+10°C liegt, wobei die Schmelztemperatur Tm der ersten, niedrigerschmelzenden Komponente insbesondere mittels dynamischer Differenzkalorimetrie (DSC) nach ISO 11357-3:2011 ermittelt wird.

Der Erfindung liegt die Erkenntnis zugrunde, dass sich der erfindungsgemäße Vliesstoff durch ein Prägemuster aus Prägungen auszeichnet, durch das optische Beeinträchtigungen des Vliesstoffes nahezu vollständig vermieden werden können. Aufgrund der speziellen Ausgestaltung der Prägungen und der Eigenschaften des Vliesstoffes ist die Wahrnehmbarkeit des Prägemusters für das menschliche Auge zumindest deutlich reduziert, sodass ein nahezu unsichtbares Prägemuster aus Prägungen resultiert. Dies wird erfindungsgemäß insbesondere durch die verhältnismäßig kleine Prägefläche der Prägungen verwirklicht. Auch der vorzugsweise vorgesehene kleinste Abstand jeweils zweier Prägungen des Prägemusters und der Anteil der Gesamtprägefläche des Prägemusters an der Gesamtoberfläche des Vliesstoffes tragen vorteilhaft zu der zumindest deutlich reduzierten Wahrnehmbarkeit des Prägemusters für das menschliche Auge bei. Nichtsdestoweniger zeichnet sich der Vliesstoff aber durch vorteilhafte mechanische Eigenschaften und eine zufriedenstellende Dicke aus. Gemäß bevorzugter Ausführungsform der Erfindung weist der Vliesstoff darüber hinaus eine sehr hohe Abriebfestigkeit und eine geringe Biegesteifigkeit auf. Es muss außerdem betont werden, dass die vorstehend beschriebenen Eigenschaften des Vliesstoffes im Rahmen der Erfindung mit wenig aufwendigen Maßnahmen realisiert werden können. Das gilt insbesondere auch für die erfindungsgemäße Vorrichtung und das erfindungsgemäße Verfahren.

Nachfolgend wird die Erfindung anhand einer lediglich ein Ausführungsbeispiel darstellenden Zeichnung näher erläutert. Es zeigen in schematischer Darstellung:
- Fig. 1: einen erfindungsgemäßen Vliesstoff in der Draufsicht
- Fig. 2: einen Querschnitt entlang A-A gemäß Fig. 1
- Fig. 3: einen Vertikalschnitt durch eine erfindungsgemäße Vorrichtung
- Fig. 4: einen Vertikalschnitt durch einen Teil der Vorrichtung gemäß Fig. 3.

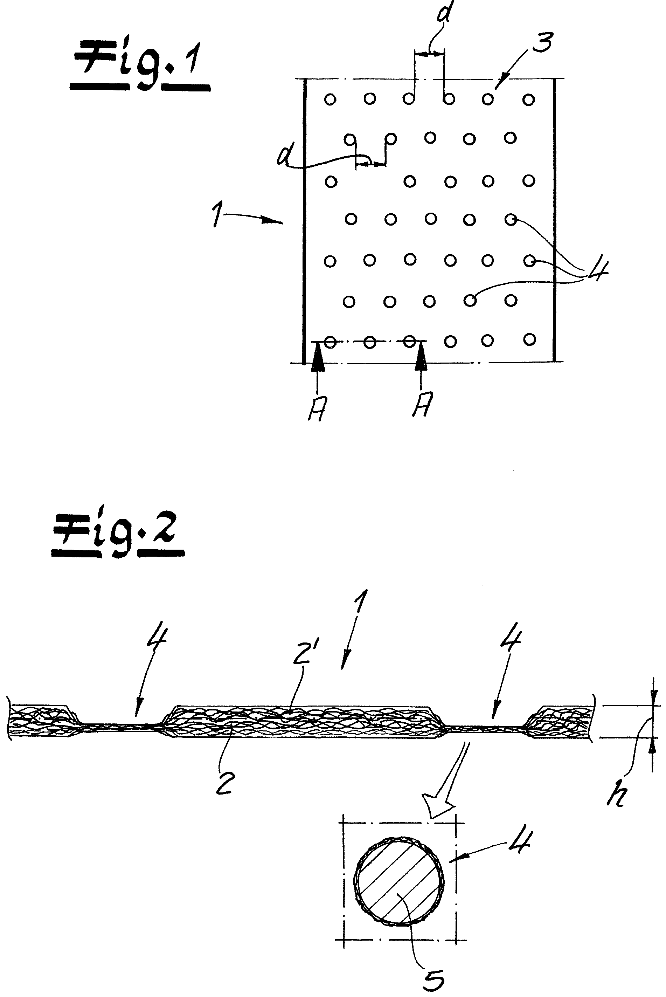

Die Figuren 1 und 2 zeigen einen erfindungsgemäßen Vliesstoff 1 mit zumindest einer Vliesbahn 2 aus Fasern. Im Ausführungsbeispiel gemäß den Figuren weist der Vliesstoff 1 zwei Vliesbahnen 2, 2' aus Endlosfilamenten 6 auf und ist insbesondere als Vlieslaminat ausgebildet. Bei den Endlosfilamenten 6 mag es sich vorzugsweise und im Ausführungsbeispiel um gekräuselte Endlosfilamente 6 handeln. Bevorzugt und im Ausführungsbeispiel handelt es sich bei dem Vliesstoff 1 um einen Spunbond-Vliesstoff mit zwei Spunbond-Vliesbahnen 2, 2' aus gekräuselten Endlosfilamenten 6. Die gekräuselten Endlosfilamente 6 mögen im Ausführungsbeispiel Bikomponentenfilamente mit exzentrischer Kern-Mantel-Konfiguration sein, wobei der Mantel der Endlosfilamente 6 bevorzugt aus Polyethylen besteht bzw. im Wesentlichen besteht und wobei der Kern der Endlosfilamente 6 insbesondere aus zumindest einem Polyester und/oder aus Polypropylen besteht bzw. im Wesentlichen besteht.

Die Figuren 1 und 2 zeigen weiterhin, dass der Vliesstoff 1 ein Prägemuster 3 aufweist, wobei das Prägemuster 3 aus einer Vielzahl von nicht miteinander verbundenen Prägungen 4 besteht. Prägung 4 meint dabei insbesondere eine verdichtete Stelle des Vliesstoffes 1, an der der Vliesstoff 1 im Vergleich zu den nicht-geprägten Bereichen eine geringere Dicke aufweist und an der die gekräuselten Endlosfilamente 6 des Vliesstoffes 1 vorzugsweise durch Einwirkung von Druck und/oder Temperatur zumindest teilweise miteinander verbunden bzw. verschmolzen sind. Das Prägemuster 3 ist bevorzugt und im Ausführungsbeispiel ein regelmäßiges Prägemuster 3, dessen einzelne Prägungen 4 vorzugsweise und im Ausführungsbeispiel in regelmäßigen Abständen auf dem Vliesstoff 1 verteilt angeordnet sind.

Erfindungsgemäß weisen die Prägungen 4 jeweils eine Prägefläche 5 von 0,05 bis 0,3 mm² auf. Prägefläche 5 einer Prägung 4 meint im Rahmen der Erfindung und im Ausführungsbeispiel insbesondere die geprägte Fläche einer Prägung 4, wobei bei der Bestimmung der Größe der Prägefläche 5 der sich gegebenenfalls im Zuge des Press- bzw. Prägevorganges bildende und die Prägung 4 zumindest teilweise umschließende Materialüberstand bzw. Materialwulst nicht Teil der Prägefläche 5 einer Prägung 4 ist. Das ist insbesondere in der Fig. 2 in schraffierter Darstellung zu erkennen. Weiter bevorzugt und im Ausführungsbeispiel ist die Prägefläche 5 der einzelnen Prägungen 4 des Prägemusters 3 gleich groß bzw. im Wesentlichen gleich groß. Vorzugsweise und im Ausführungsbeispiel gemäß den Figuren weisen die Prägeflächen 5 der Prägungen 4 in der Draufsicht eine punktförmige bzw. kreisförmige Geometrie auf. Ganz besonders bevorzugt und im Ausführungsbeispiel weist das Prägemuster 3 gleiche bzw. gleich große Prägungen 4 oder im Wesentlichen gleiche bzw. gleich große Prägungen 4 mit homogener Verteilung von Prägungen 4 gleicher Geometrie bzw. von im Wesentlichen gleicher Geometrie auf.

Im Rahmen der Erfindung beträgt der kleinste Abstand d zweier Prägungen 4 des Prägemusters 3 jeweils 0,6 bis 2,5 mm. Kleinster Abstand d zweier Prägungen 4 meint dabei insbesondere den kleinsten Abstand d zweier unmittelbar benachbarter Prägungen 4 des Prägemusters 5, also bevorzugt den kleinsten Abstand d einer Prägung 4 zu der ihr nächstgelegenen Prägung 4 des Prägemusters 3. Darüber hinaus bezieht sich der kleinste Abstand d zweier Prägungen 4 insbesondere auf den kleinsten Abstand d zwischen den Prägungsbegrenzungen zweier Prägungen 4, also auf den kleinsten Abstand der beiden Prägungen 4 entlang der dazwischenliegenden nicht-geprägten Fläche des Vliesstoffes 1.

Bewährtermaßen beträgt der Anteil der Gesamtprägefläche des Prägemusters 3 an der Gesamtoberfläche des Vliesstoffes 1 2 bis 12%. Gesamtprägefläche des Prägemusters 3 meint in diesem Zusammenhang insbesondere die Summe der Prägeflächen 5 des Prägemusters 3. Gesamtoberfläche des Vliesstoffes 1 meint im Rahmen der Erfindung insbesondere die gesamte Vliesstoffoberfläche einschließlich der geprägten und nicht-geprägten Bereiche.

Weiter bevorzugt ist das Aspektverhältnis der Prägefläche 5 der Prägungen 4 jeweils kleiner als 3, bevorzugt kleiner als 2. Aspektverhältnis der Prägefläche 5 meint in diesem Zusammenhang insbesondere das Verhältnis der größten Länge bzw. Längserstreckung der Prägefläche 5 einer Prägung 4 zur größten Breite bzw. Breitenerstreckung einer Prägefläche 5 der Prägung 4. Im Ausführungsbeispiel gemäß den Figuren, bei dem die Prägeflächen 5 der Prägungen 4 in der Draufsicht eine punktförmige bzw. kreisförmige Geometrie aufweisen, ist das Aspektverhältnis somit gleich 1.

Zweckmäßigerweise beträgt die Dicke h des Vliesstoffes 1 0,15 bis 0,75 mm. Im Ausführungsbeispiel gemäß den Figuren mag die Dicke h des Vliesstoffes 1 etwa 0,4 mm betragen. Dicke h meint dabei die größte Dicke bzw. Gesamtdicke des Vliesstoffes 1 quer, insbesondere senkrecht bzw. im Wesentlichen senkrecht zu seiner flächigen Erstreckung in den nicht-geprägten Bereichen des Vliesstoffes 1. Das ist insbesondere in der Fig. 2 zu erkennen.

Das Prägemuster 3 des Vliesstoffes, das eine Vielzahl von Prägungen 4 aufweist, zeichnet sich im Rahmen der Erfindung insbesondere dadurch aus, dass die Wahrnehmbarkeit des Prägemusters 3 aufgrund der speziellen Ausgestaltung der Prägungen 4 und der Eigenschaften des Vliesstoffes 1 für das für das menschliche Auge zumindest deutlich reduziert ist, sodass ein kaum sichtbares Prägemuster 3 aus Prägungen 4 resultiert.

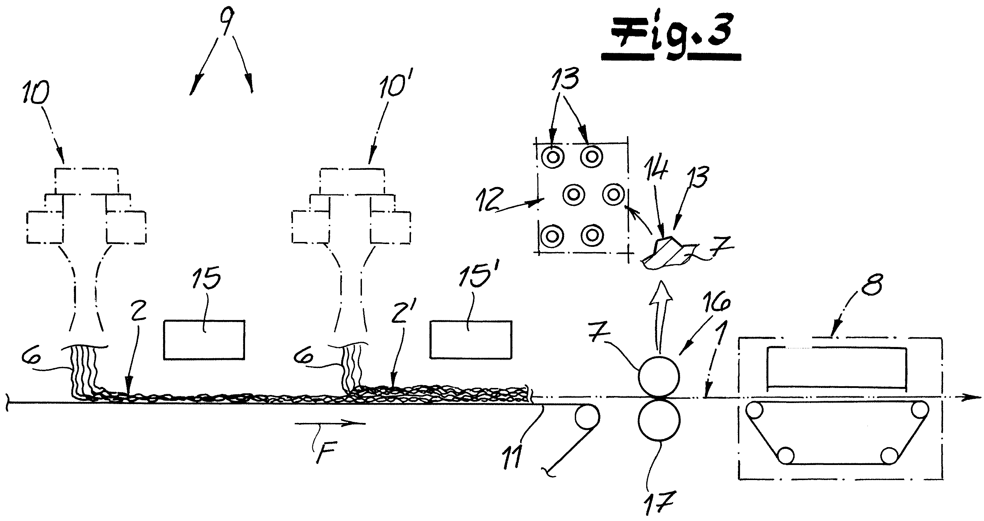

Die Fig. 3 zeigt eine erfindungsgemäße Vorrichtung 9 zur Herstellung eines vorstehend beschriebenen Vliesstoffes 1 mit zwei Vliesbahnen 2, 2' aus gekräuselten Endlosfilamenten 6. Die Vorrichtung weist vorzugsweise und im Ausführungsbeispiel zwei Spinnbalken 10, 10' auf, die bevorzugt und im Ausführungsbeispiel zur Erzeugung jeweils einer Spunbond-Vliesbahn 2, 2' aus gekräuselten Endlosfilamenten 6 in Form von Bikomponentenfilamenten eingerichtet sind. Es ist außerdem entsprechend bevorzugter Ausführungsform ein endlos umlaufendes Ablagesiebband 11 für die Ablage der Endlosfilamente 6 zur Vliesbahn 2, 2' vorhanden. Die Vorrichtung 9 weist erfindungsgemäß die Kalanderwalze 7 zur Einbringung des Prägemusters 3 in den Vliesstoff 1 auf. Vorzugsweise und im Ausführungsbeispiel ist die Kalanderwalze 7 Teil eines Kalanders 16 aus einem Kalanderwalzenpaar 7, 17. Bevorzugt und im Ausführungsbeispiel weist eine Kalanderwalze 7 des Kalanders 16 ein Komplementärprägemuster 12 aus Prägeelementen 13 auf, die jeweils eine Pressfläche 14 von 0,05 bis 0,3 mm² aufweisen. Pressfläche 14 meint dabei insbesondere die für die Erzeugung der Prägefläche 5 der Prägungen 4 des Vliesstoffes 1 vorgesehene Fläche der Prägeelemente 13 der Kalanderwalze 7. Bevorzugt und im Ausführungsbeispiel gemäß der Fig. 3 sind die Prägeelemente 13 der Kalanderwalze 7 kegelstumpfförmig ausgebildet und die Pressfläche 14 entspricht der Deckfläche des Kegelstumpfes. Die andere bzw. weitere Kalanderwalze 17 des Kalanders 16 ist bevorzugt und im Ausführungsbeispiel als Glattwalze 17 mit einer glatten Außenoberfläche ausgebildet.

Gemäß besonders bevorzugter Ausführungsform und im Ausführungsbeispiel weist die Vorrichtung 9 eine Heißluft-Hauptverfestigungseinrichtung 8 auf, die vorzugsweise in Förderrichtung F des Vliesstoffes 1 hinter der Kalanderwalze 7 bzw. hinter dem Kalander 16 angeordnet ist. Bevorzugt ist die Heißluft-Hauptverfestigungseinrichtung 8 als Heißluftofen ausgebildet. Zweckmäßigerweise und im Ausführungsbeispiel weist die Vorrichtung 9 darüber hinaus zwei Vorverfestigungseinrichtungen in Form von Heißluft-Vorverfestigungseinrichtungen 15, 15' auf. Die Heißluft-Vorverfestigungseinrichtungen 15, 15' sind vorzugsweise und im Ausführungsbeispiel jeweils in Förderrichtung F des Vliesstoffes 1 vor der Kalanderwalze 7 bzw. vor dem Kalander 16 angeordnet. Vorzugsweise und im Ausführungsbeispiel gemäß der Fig. 3 sind die Heißluft-Vorverfestigungseinrichtungen 15, 15' jeweils einem Spinnbalken 10, 10' zur Vorverfestigung der abgelegten Vliesbahn 2, 2' unmittelbar nachgeschaltet. Eine erste Heißluft-Vorverfestigungseinrichtung 15 ist in Förderrichtung F des Vliesstoffes 1 bevorzugt einem ersten Spinnbalken 10 unmittelbar nachgeschaltet und anschließend folgt ein zweiter Spinnbalken 10', dem die zweite Heißluft-Vorverfestigungseinrichtung 15' unmittelbar nachgeschaltet ist. Die Heißluft-Vorverfestigungseinrichtungen 15, 15' sind bevorzugt als Heißluftmesser und/oder als Heißluftfeld eingerichtet.

Im Rahmen der Erfindung und im Ausführungsbeispiel gemäß Fig. 3 wird von dem ersten Spinnbalken 10 zunächst eine Vliesbahn 2 aus gekräuselten Endlosfilamenten 6 erzeugt und auf dem Ablagesiebband 11 abgelegt. Die Vliesbahn 2 wird anschließend bevorzugt und im Ausführungsbeispiel mittels der Heißluft-Vorverfestigungseinrichtung 15 vorverfestigt. Danach wird zweckmäßigerweise eine zweite Vliesbahn 2' aus gekräuselten Endlosfilamenten 6 von dem zweiten Spinnbalken 10' erzeugt und auf der ersten Vliesbahn 2 abgelegt. Die zweite Vliesbahn 2' bzw. das Aggregat aus der ersten Vliesbahn 2 und der zweiten Vliesbahn 2' wird empfohlenermaßen anschließend mit der zweiten Heißluft-Vorverfestigungseinrichtung 15' vorverfestigt und darauffolgend vorzugsweise von dem Ablagesiebband 11 abgelöst und dem die Kalanderwalze 7 aufweisenden Kalander 16 zugeführt. Mittels der Kalanderwalze 7 des Kalanders 16 wird ein Prägemuster 3 aus einer Vielzahl von Prägungen 4 in den Vliesstoff 1 eingebracht und der Vliesstoff 1 wird dabei zweckmäßigerweise verfestigt. Anschließend erfolgt bevorzugt die Verfestigung bzw. Hauptverfestigung des Vliesstoffes 1 mittels der zumindest einen Heißluft-Hauptverfestigungseinrichtung 8.

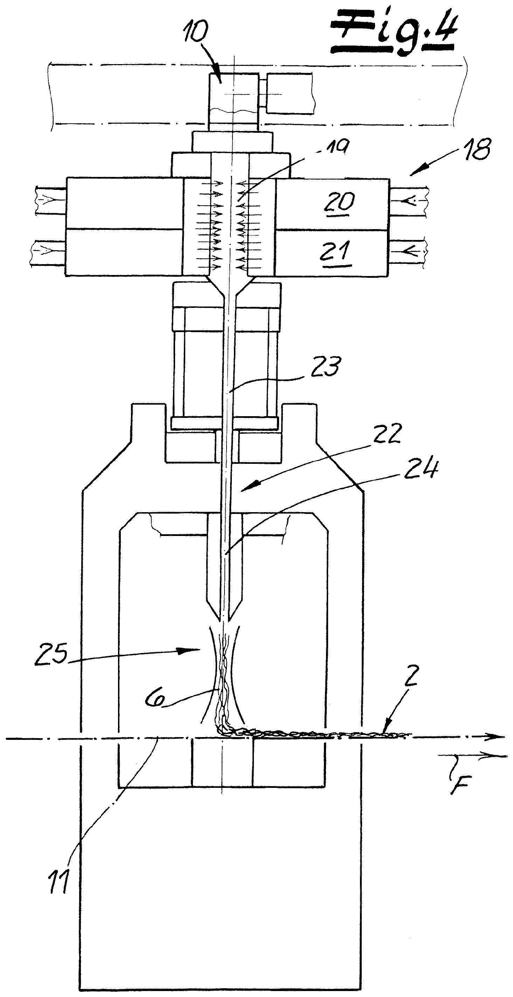

Die Fig. 4 zeigt den grundsätzlichen Aufbau eines Teils der erfindungsgemäßen Vorrichtung 9 zur Erzeugung einer Vliesbahn 2 nach dem Spundbond-Verfahren umfassend eine Spinnerette bzw. den Spinnbalken 10 zum Erspinnen der Endlosfilamente 6 für die Spunbond-Vliesbahn 2 aus Endlosfilamenten 6. Dievon der Spinnerette bzw. dem Spinnbalken 10 ersponnenen Endlosfilamente 6 werden in eine Kühlvorrichtung 18 mit einer Kühlkammer 19 eingeführt. Vorzugsweise und im Ausführungsbeispiel sind an zwei gegenüberliegenden Seiten der Kühlkammer 19 übereinander angeordnete Luftzufuhrkabinen 20, 21 angeordnet. Aus den übereinander angeordneten Luftzufuhrkabinen 20, 21 wird bevorzugt Luft unterschiedlicher Temperatur in die Kühlkammer 19 eingeführt.

Empfohlenermaßen und im Ausführungsbeispiel ist der Kühlvorrichtung 18 in Filamentströmungsrichtung eine Verstreckvorrichtung 22 zum Verstrecken der Endlosfilamente 6 nachgeschaltet. Zweckmäßigerweise und im Ausführungsbeispiel weist die Verstreckvorrichtung 22 einen Zwischenkanal 23 auf, der die Kühlvorrichtung 18 mit einem Verstreckschacht 24 der Verstreckvorrichtung 22 verbindet. Bevorzugt und im Ausführungsbeispiel ist das Aggregat aus Kühlvorrichtung 18, dem Zwischenkanal 23 und dem Verstreckschacht 24 als geschlossenes Aggregat ausgebildet und außer der Zufuhr von Kühlluft in der Kühlvorrichtung 18 erfolgt keine weitere Luftzufuhr von außen in dieses Aggregat.

Zweckmäßigerweise und im Ausführungsbeispiel schließt in Filamentströmungsrichtung an die Verstreckvorrichtung 22 ein Diffusor 25 an, durch den die Endlosfilamente 6 geführt werden. Nach Durchlaufen des Diffusors 25 werden die Endlosfilamente 6 vorzugsweise und im Ausführungsbeispiel auf einer als Ablagesiebband 11 ausgebildeten Ablageeinrichtung abgelegt. Das Ablagesiebband 11 ist bevorzugt und im Ausführungsbeispiel als endlos umlaufendes Ablagesiebband 11 ausgeführt. Es liegt im Rahmen der Erfindung, dass das Ablagesiebband 11 luftdurchlässig ist, sodass eine Absaugung von Prozessluft von unten durch das Ablagesiebband möglich ist.

## Patentansprüche

1. Vliesstoff mit zumindest einer Vliesbahn (2) aus Fasern, wobei der Vliesstoff (1) ein Prägemuster (3) aufweist, wobei das Prägemuster (3) aus einer Vielzahl von - vorzugsweise nicht miteinander verbundenen - Prägungen (4) besteht, wobei die Prägungen (4) jeweils eine Prägefläche (5) von 0,07 bis 0,18 mm², besonders bevorzugt von 0,08 bis 0,15 mm² und ganz besonders bevorzugt von 0,09 bis 0,12 mm² aufweisen und wobei der Anteil der Gesamtprägefläche des Prägemusters (3) an der Gesamtoberfläche des Vliesstoffes (1) 2,5 bis 8% beträgt.

2. Vliesstoff nach Anspruch 1, wobei der kleinste Abstand d zweier Prägungen (4) des Prägemusters (3) jeweils 0,6 bis 2,5 mm, vorzugsweise 0,8 bis 2,0 mm, bevorzugt 0,9 bis 1,8 mm, besonders bevorzugt 0,95 bis 1,6 mm und ganz besonders bevorzugt 1,0 bis 1,5 mm beträgt.

3. Vliesstoff nach einem der Ansprüche 1 oder 2, wobei der Anteil der Gesamtprägefläche des Prägemusters (3) an der Gesamtoberfläche des Vliesstoffes (1) 3 bis 6%, besonders bevorzugt 3,5 bis 5,5% und ganz besonders bevorzugt 4 bis 5% beträgt.

4. Vliesstoff nach einem der Ansprüche 1 bis 3, wobei die Prägeflächen (5) der Prägungen (4) in der Draufsicht zumindest eine Geometrie ausgewählt aus der Gruppe: "punktförmig bzw. kreisförmig, ellipsenförmig, quadratisch, rechteckig, rautenförmig, mehreckig, linienförmig, wellenförmig" aufweisen.

5. Vliesstoff nach einem der Ansprüche 1 bis 4, wobei das Aspektverhältnis der Prägefläche (5) der Prägungen (4) jeweils kleiner als 4, bevorzugt kleiner als 3, besonders bevorzugt kleiner als 2, beispielsweise gleich 1, ist.

6. Vliesstoff nach einem der Ansprüche 1 bis 5, wobei die Fasern der zumindest einen Vliesbahn (2) als Endlosfilamente (6), vorzugsweise als gekräuselte Endlosfilamente (6), ausgebildet sind, wobei die gekräuselten Endlosfilamente (6) bevorzugt Multikomponentenfilamente, besonders bevorzugt Bikomponentenfilamente, sind.

7. Vliesstoff nach Anspruch 6, wobei die Multikomponentenfilamente bzw. Bikomponentenfilamente eine erste Komponente aufweisen, die aus zumindest einem thermoplastischen Kunststoff, insbesondere aus zumindest einem Polyolefin, vorzugsweise aus Polyethylen und/oder aus Polypropylen besteht bzw. im Wesentlichen besteht und/oder wobei die Multikomponentenfilamente bzw. Bikomponentenfilamente eine zweite bzw. weitere Komponente aufweisen, die aus zumindest einem thermoplastischen Kunststoff, insbesondere aus zumindest einem Polyester und/oder aus Polypropylen besteht bzw. im Wesentlichen besteht.

8. Vliesstoff nach einem der Ansprüche 6 oder 7, wobei die Endlosfilamente (6), vorzugsweise die gekräuselten Endlosfilamente (6), als Multikomponentenfilamente bzw. Bikomponentenfilamente mit Seite-an-Seite-Konfiguration und/oder mit Kern-Mantel-Konfiguration, insbesondere mit exzentrischer Kem-Mantel-Konfiguration, ausgebildet sind und wobei bevorzugt die erste Komponente die Mantelkomponente und die zweite Komponente die Kernkomponente ist.

9. Vliesstoff nach einem der Ansprüche 1 bis 8, wobei der Vliesstoff (1) ein Flächengewicht von weniger als 200 g/m², insbesondere von weniger als 150 g/m², vorzugsweise von weniger als 100 g/m², bevorzugt von weniger als 75 g/m², besonders bevorzugt von weniger als 50 g/m² und ganz besonders bevorzugt von weniger als 30 g/m² aufweist.

10. Vliesstoff nach einem der Ansprüche 1 bis 9, wobei der Vliesstoff (1) eine Dicke h von 0,1 bis 0,85 mm, vorzugsweise von 0,15 bis 0,75 mm, bevorzugt von 0,2 bis 0,65 mm, besonders bevorzugt von 0,25 bis 0,55 mm, gemessen nach der Methode WRT 120.6(05)-Option A, aufweist.

11. Vliesstoff nach einem der Ansprüche 1 bis 10, wobei der Vliesstoff (1) eine Abriebfestigkeit von zumindest Klasse 2 nach Martindale, vorzugsweise von Klasse 1 nach Martindale aufweist und/oder wobei der Vliesstoff (1) eine maximale Biegesteifigkeit mit einem Cantilever von maximal 100 mm, vorzugsweise von maximal 90 mm, bevorzugt von maximal 80 mm, besonders bevorzugt von maximal 75 mm und ganz besonders bevorzugt von maximal 70 mm aufweist.

12. Vliesstoff nach einem der Ansprüche 1 bis 11, wobei die Festigkeit des Vliesstoffes (1) in Maschinenrichtung (MD-Richtung) zumindest 8 N/5 cm, insbesondere zumindest 10 N/5 cm, vorzugsweise zumindest 15 N/5 cm, bevorzugt zumindest 17,5 N/5 cm, besonders bevorzugt zumindest 20 N/5 cm, ganz besonders bevorzugt zumindest 22,5 N/5 cm beträgt.

13. Vliesstoff nach einem der Ansprüche 1 bis 12, wobei die Tiefe t der Prägungen (4) jeweils 0,1 bis 0,8 mm, bevorzugt 0,15 bis 0,7 mm, besonders bevorzugt 0,2 bis 0,6 mm, ganz besonders bevorzugt 0,25 bis 0,5 mm beträgt.

14. Vliesstoff nach einem der Ansprüche 1 bis 13, wobei der Vliesstoff (1) als Vlieslaminat aus zumindest zwei Vliesbahnen (2, 2') bzw. Vliesstofflagen ausgebildet ist.

15. Vliesstoff nach einem der Ansprüche 1 bis 14, wobei der Vliesstoff (1) mit zumindest einer Kalanderwalze (7) zur Erzeugung des Prägemusters (3) und vorzugsweise mit zumindest einer Heißfluid-Hauptverfestigungseinrichtung, insbesondere mit zumindest einer Heißluft-Hauptverfestigungseinrichtung (8), verfestigt ist.

16. Vorrichtung zur Herstellung eines Vliesstoffes (1) nach einem der Ansprüche 1 bis 15 mit zumindest einer Vliesbahn (2) aus Fasern, wobei die Vorrichtung (9) zumindest eine Fasererzeugungseinrichtung, insbesondere zumindest einen Spinnbalken (10) und zumindest eine Ablageeinrichtung, insbesondere zumindest ein Ablagesiebband (11), für die Ablage der Fasern zur Vliesbahn (2) aufweist und wobei weiterhin zumindest eine Kalanderwalze (7) zur Einbringung eines Prägemusters (3) aus einer Vielzahl von Prägungen (4) in den Vliesstoff (1) vorgesehen ist, wobei die Kalanderwalze (7) dazu ein Komplementärprägemuster (12) aus Prägeelementen (13) aufweist, wobei die Prägeelemente (13) jeweils eine Pressfläche (14) von 0,07 bis 0,18 mm², besonders bevorzugt von 0,08 bis 0,15 mm² und ganz besonders bevorzugt von 0,09 bis 0,12 mm² aufweisen.

17. Vorrichtung nach Anspruch 16, wobei die Vorrichtung (9) zumindest eine Heißfluid-Hauptverfestigungseinrichtung, insbesondere zumindest eine Heißluft-Hauptverfestigungseinrichtung (8), aufweist, wobei die Heißfluid-Hauptverfestigungseinrichtung in Förderrichtung F des Vliesstoffes (1) vorzugsweise hinter der Kalanderwalze (7) angeordnet ist.

18. Vorrichtung nach einem der Ansprüche 16 oder 17, wobei die Vorrichtung zumindest eine Vorverfestigungseinrichtung, insbesondere zumindest eine Heißfluid-Vorverfestigungseinrichtung, bevorzugt zumindest eine Heißluft-Vorverfestigungseinrichtung (15), aufweist, wobei die Vorverfestigungseinrichtung besonders bevorzugt in Förderrichtung F des Vliesstoffes (1) vor der Kalanderwalze (7) angeordnet ist und ganz besonders bevorzugt der zumindest einen Fasererzeugungseinrichtung bzw. dem zumindest einen Spinnbalken (10) nachgeschaltet bzw. unmittelbar nachgeschaltet ist.

19. Verfahren zur Herstellung eines Vliesstoffes (1) mit zumindest einer Vliesbahn (2) aus Fasern, insbesondere zur Herstellung eines Vliesstoffes (1) gemäß einem der Ansprüche 1 bis 15 und/oder mit einer Vorrichtung (9) gemäß einem der Ansprüche 16 bis 18, wobei Fasern mit zumindest einer Fasererzeugungseinrichtung, insbesondere mit zumindest einem Spinnbalken (10) erzeugt werden, wobei die Fasern anschließend auf zumindest einer Ablageeinrichtung, insbesondere auf zumindest einem Ablagesiebband (11) zur Vliesbahn (2) abgelegt werden, wobei die Vliesbahn (2) bzw. der Vliesstoff (1) anschließend mit zumindest einer Kalanderwalze (7) verfestigt wird und wobei mittels der zumindest einen Kalanderwalze (7) ein Prägemuster (3) aus einer Vielzahl von Prägungen (4) in den Vliesstoff (1) eingebracht wird, wobei die Prägungen (4) jeweils eine Prägefläche (5) von 0,07 bis 0,18 mm², besonders bevorzugt von 0,08 bis 0,15 mm² und ganz besonders bevorzugt von 0,09 bis 0,12 mm² aufweisen und wobei der Anteil der Gesamtprägefläche des Prägemusters (3) an der Gesamtoberfläche des Vliesstoffes (1) 2,5 bis 8% beträgt.

20. Verfahren nach Anspruch 19, wobei der Vliesstoff (1) - vorzugsweise im Anschluss an die Verfestigung mit der zumindest einen Kalanderwalze (7) - mit zumindest einer Heißfluid-Hauptverfestigungseinrichtung, insbesondere mit zumindest einer Heißluft-Hauptverfestigungseinrichtung (8) verfestigt, insbesondere hauptverfestigt, wird.

21. Verfahren nach einem der Ansprüche 19 oder 20, wobei der Vliesstoff (1) nach der Ablage auf der Ablageeinrichtung, insbesondere auf dem Ablagesiebband (11), zunächst mit zumindest einer Vorverfestigungseinrichtung, insbesondere mit zumindest einer Heißfluid-Vorverfestigungseinrichtung, vorzugsweise mit zumindest einer Heißluft-Vorverfestigungseinrichtung (15) vorverfestigt wird, vorzugsweise anschließend mit der zumindest einen Kalanderwalze (7) verfestigt wird und darauffolgend bevorzugt mit einer Heißfluid-Hauptverfestigungseinrichtung bzw. Heißluft-Hauptverfestigungseinrichtung (8) verfestigt, insbesondere hauptverfestigt, wird.

22. Verfahren nach einem der Ansprüche 20 oder 21, wobei die Oberflächentemperatur der zumindest einen Kalanderwalze (7) höher ist, insbesondere um 1°C bis 15°C, bevorzugt um 1°C bis 5°C höher ist, als die Temperatur des Heißfluids der zumindest einen Heißfluid-Hauptverfestigungseinrichtung oder niedriger ist als die Temperatur des Heißfluids der zumindest einen Heißfluid-Hauptverfestigungseinrichtung oder identisch bzw. im Wesentlichen identisch zu der Temperatur des Heißfluids der zumindest einen Heißfluid-Hauptverfestigungseinrichtung ist.

## Claims

1. Nonwoven fabric comprising at least one nonwoven web (2) of fibres, wherein the nonwoven fabric (1) has an embossing pattern (3), wherein the embossing pattern (3) consists of a plurality of - preferably not interconnected - embossments (4), wherein the embossments (4) each have an embossing area (5)of 0.07 to 0.18 mm², particularly preferably of 0.08 to 0.15 mm² and quite particularly preferably of 0.09 to 0.12 mm² and wherein the proportion of the total embossing area of the embossing pattern (3) to the total surface area of the nonwoven fabric (1) is 2.5 to 8%.

2. Nonwoven fabric according to Claim 1, wherein the smallest distance d between two embossments (4) of the embossing pattern (3) is in each case 0.6 to 2.5 mm, preferably 0.8 to 2.0 mm, more preferably 0.9 to 1.8 mm, particularly preferably 0.95 to 1.6 mm and quite particularly preferably 1.0 to 1.5 mm.

3. Nonwoven fabric according to one of Claims 1 or 2, wherein the proportion of the total embossing area of the embossing pattern (3) to the total surface area of the nonwoven fabric (1) is 3 to 6%, particularly preferably 3.5 to 5.5% and quite particularly preferably 4 to 5%.

4. Nonwoven fabric according to one of Claims 1 to 3, wherein the embossing areas (5) of the embossments (4) in plan view have at least one geometry selected from the group: "punctuate or circular, elliptical, square, rectangular, diamond-shaped, polygonal, linear, wavy".

5. Nonwoven fabric according to one of Claims 1 to 4, wherein the aspect ratio of the embossing area (5) of the embossments (4) is in each case less than 4, preferably less than 3, particularly preferably less than 2, for example equal to 1.

6. Nonwoven fabric according to one of Claims 1 to 5, wherein the fibres of the at least one nonwoven web (2) are formed as continuous filaments (6), preferably as crimped continuous filaments (6), wherein the crimped continuous filaments (6) are preferably multi-component filaments, particularly preferably bicomponent filaments.

7. Nonwoven fabric according to Claim 6, wherein the multi-component filaments or bicomponent filaments have a first component which consists or substantially consists of at least one thermoplastic material, in particular of at least one polyolefin, preferably of polyethylene and/or polypropylene and/or wherein the multi-component filaments or bicomponent filaments have a second or further component which consists or substantially consists of at least one thermoplastic material, in particular of at least one polyester and/or polypropylene.

8. Nonwoven fabric according to one of Claims 6 or 7, wherein the continuous filaments (6), preferably the crimped continuous filaments (6), are configured as multi-component filaments or bicomponent filaments with side-by-side configuration and/or with core-sheath configuration, in particular with eccentric core-sheath configuration, and wherein preferably the first component is the sheath component and the second component is the core component.

9. Nonwoven fabric according to one of Claims 1 to 8, wherein the nonwoven fabric (1) has a mass per unit area of less than 200 g/m², in particular of less than 150 g/m², preferably of less than 100 g/m², more preferably of less than 75 g/m², particularly preferably of less than 50 g/m², and quite particularly preferably of less than 30 g/m².

10. Nonwoven fabric according to one of Claims 1 to 9, wherein the nonwoven fabric (1) has a thickness h of 0.1 to 0.85 mm, preferably of 0.15 to 0.75 mm, more preferably of 0.2 to 0.65 mm, particularly preferably of 0.25 to 0.55 mm, measured according to the method WRT 120.6(05)- Option A.

11. Nonwoven fabric according to one of Claims 1 to 10, wherein the nonwoven fabric (1) has an abrasion resistance of at least class 2 according to Martindale, preferably class 1 according to Martindale and/or wherein the nonwoven fabric (1) has a maximum flexural stiffness with a cantilever of at most 100 mm, preferably of at most 90 mm, preferably of at most 80 mm, particularly preferably of at most 75 mm and most particularly preferably of at most 70 mm.

12. Nonwoven fabric according to one of Claims 1 to 11, wherein the strength of the nonwoven fabric (1) in the machine direction (MD direction) is at least 8 N/5 cm, in particular at least 10 N/5 cm, preferably at least 15 N/5 cm, preferably at least 17.5 N/5 cm, particularly preferably at least 20 N/5 cm, quite particularly preferably at least 22.5 N/5 cm.

13. Nonwoven fabric according to one of Claims 1 to 12, wherein the depth t of the embossments (4) is in each case 0.1 to 0.8 mm, preferably 0.15 to 0.7 mm, particularly preferably 0.2 to 0.6 mm, quite particularly preferably 0.25 to 0.5 mm.

14. Nonwoven fabric according to one of Claims 1 to 13, wherein the nonwoven fabric (1) is configured as a nonwoven laminate composed of at least two nonwoven webs (2, 2') or nonwoven fabric layers.

15. Nonwoven fabric according to one of Claims 1 to 14, wherein the nonwoven fabric (1) is consolidated with at least one calender roller (7) for producing the embossing pattern (3) and preferably with at least one hot fluid main consolidation device, in particular with at least one hot-air main consolidation device (8).

16. Device for producing a nonwoven fabric (1) according to one of Claims 1 to 15 comprising at least one nonwoven web (2) of fibres, wherein the device (9) has at least one fibre-producing device, in particular at least one spinning beam (10) and at least one depositing device, in particular at least one depositing foraminous belt (11), for depositing the fibres to form the nonwoven web (2), and wherein furthermore at least one calender roller (7) is provided for introducing an embossing pattern (3) comprising a plurality of embossments (4) into the nonwoven fabric (1), wherein for this purpose the calender roller (7) has a complementary embossing pattern (12) comprising embossing elements (13), wherein the embossing elements (13) each have a pressing area (14) of 0.07 to 0.18 mm², particularly preferably of 0.08 to 0.15 mm² and most particularly preferably of 0.09 to 0.12 mm².

17. Device according to claim 16, wherein the device (9) comprises at least one hot fluid main consolidation device, in particular at least one hot-air main consolidation device (8), wherein the hot fluid main consolidation device is preferably arranged downstream of the calender roller (7) in the conveying direction F of the nonwoven fabric (1).

18. Device according to one of Claims 16 or 17, wherein the device comprises at least one pre-consolidation device, in particular at least one hot fluid pre-consolidation device, preferably at least one hot-air pre-consolidation device (15), wherein the pre-consolidation device is particularly preferably arranged in the conveying direction F of the nonwoven fabric (1) upstream of the calender roller (7) and quite particularly preferably is arranged downstream or immediately downstream of the at least one fibre-producing device or the at least one spinning beam (10).

19. Method for producing a nonwoven fabric (1) comprising at least one nonwoven web (2) of fibres, in particular for producing a nonwoven fabric (1) according to one of Claims 1 to 15 and/or with a device (9) according to one of Claims 16 to 18, wherein fibres are produced with at least one fibre-producing device , in particular with at least one spinning beam (10), wherein the fibres are subsequently deposited on at least one depositing device, in particular on at least one depositing foraminous belt (11) to form the nonwoven web (2), wherein the nonwoven web (2) or the nonwoven fabric (1) is subsequently consolidated with at least one calender roller (7) and wherein an embossing pattern (3) comprising a plurality of embossments (4) is introduced into the nonwoven fabric (1) by means of the at least one calender roller (7), wherein the embossments (4) each have an embossing area (5) of 0.07 to 0.18 mm², particularly preferably of 0.08 to 0.15 mm² and quite particularly preferably of 0.09 to 0.12 mm² and wherein the proportion of the total embossing area of the embossing pattern (3) to the total surface area of the nonwoven fabric (1) is 2.5 to 8%.

20. Method according to Claim 19, wherein the nonwoven fabric (1) - preferably following the consolidation with the at least one calender roller (7) - is consolidated, in particular main-consolidated, with at least one hot fluid main consolidation device, in particular with at least one hot-air main consolidation device (8).

21. Method according to one of Claims 19 or 20, wherein the nonwoven fabric (1), after being deposited on the depositing device, in particular on the depositing foraminous belt (11), is first pre-consolidated with at least one pre-consolidation device, in particular with at least one hot fluid pre-consolidation device, preferably with at least one hot-air pre-consolidation device (15), preferably then consolidated with the at least one calender roller(7) and subsequently preferably consolidated, in particular main-consolidated, with a hot fluid main consolidation device or hot-air main consolidation device (8).

22. Method according to one of Claims 20 or 21, wherein the surface temperature of the at least one calender roller (7) is higher, in particular by 1°C to 15°C, preferably by 1°C to 5°C higher, than the temperature of the hot fluid of the at least one hot fluid main consolidation device or is lower than the temperature of the hot fluid of the at least one hot fluid main consolidation device or is identical or substantially identical to the temperature of the hot fluid of the at least one hot fluid main consolidation device.

## Revendications

1. Non-tissé, comprenant au moins une nappe (2) de non-tissé en fibres, le non-tissé (1) présentant un motif de gaufrage (3), le motif de gaufrage (3) étant constitué d'une pluralité d'empreintes (4) - de préférence non reliées entre elles -, les empreintes (4) présentant chacune une surface de gaufrage (5) de 0,07 à 0,18 mm², de manière particulièrement préférentielle de 0,08 à 0,15 mm² et de manière tout particulièrement préférentielle de 0,09 à 0,12 mm² et la proportion de la surface totale de gaufrage du motif de gaufrage (3) en rapport à la surface totale du non-tissé (1) étant de 2,5 à 8 %.

2. Non-tissé selon la revendication 1, le plus petit écart d entre deux empreintes (4) du motif de gaufrage (3) étant respectivement de 0,6 à 2,5 mm, de préférence de 0,8 à 2,0 mm, de manière préférentielle, de 0,9 à 1,8 mm, de manière particulièrement préférentielle, de 0,95 à 1,6 mm et de manière tout particulièrement préférentielle, de 1,0 à 1,5 mm.

3. Non-tissé selon l'une quelconque des revendications 1 ou 2, la proportion de la surface totale de gaufrage du motif de gaufrage (3) en rapport à la surface totale du non-tissé (1) étant de 3 à 6 %, de manière particulièrement préférentielle, de 3,5 à 5,5 % et de manière tout particulièrement préférentielle, de 4 à 5 %.

4. Non-tissé selon l'une quelconque des revendications 1 à 3, vues en élévation, les surfaces de gaufrage (5) des empreintes (4) présentant au moins une géométrie sélectionnée dans le groupe : "ponctiforme ou circulaire, elliptique, carrée, rectangulaire, en forme de losange, polygonale, linéaire, ondulée".

5. Non-tissé selon l'une quelconque des revendications 1 à 4, le rapport d'aspect de la surface de gaufrage (5) des empreintes (4) étant respectivement inférieur à 4, de manière préférentielle, inférieur à 3, de manière particulièrement préférentielle inférieur à 2, par exemple égal à 1.

6. Non-tissé selon l'une quelconque des revendications 1 à 5, les fibres de l'au moins une nappe (2) de non-tissé étant conçues sous la forme de filaments continus (6), de préférence sous la forme de filaments continus (6) frisés, les filaments continus (6) frisés étant de manière préférentielle des filaments multicomposants, de manière particulièrement préférentielle, des filaments bicomposants.

7. Non-tissé selon la revendication 6, les filaments multicomposants ou les filaments bicomposants présentant un premier composant qui est constitué ou essentiellement constitué d'au moins une matière thermoplastique, notamment d'au moins une polyoléfine, de préférence de polyéthylène et / ou de polypropylène et / ou les filaments multicomposants ou les filaments bicomposants présentant un deuxième ou un autre composant, qui est constitué ou essentiellement constitué d'au moins une matière thermoplastique, notamment d'au moins un polyester et / ou de polypropylène.

8. Non-tissé selon l'une quelconque des revendications 6 ou 7, les filaments continus (6), de préférence les filaments continus (6) frisés étant conçus sous la forme de filaments multicomposants ou de filaments bicomposants de configuration côte à côte et / ou de configuration âme-gaine, notamment de configuration âme-gaine excentrée et de manière préférentielle, le premier composant étant le composant de la gaine et le deuxième composant étant le composant de l'âme.

9. Non-tissé selon l'une quelconque des revendications 1 à 8, le non-tissé (1) présentant un grammage de moins de 200 g/m² notamment de moins de 150 g/m², de préférence de moins de 100 g/m², de manière préférentielle, de moins de 75 g/m², de manière particulièrement préférentielle de moins de 50 g/m² et de manière tout particulièrement préférentielle, de moins de 30 g/m².

10. Non-tissé selon l'une quelconque des revendications 1 à 9, le non-tissé (1) présentant une épaisseur h de 0,1 à 0,85 mm, de préférence de 0,15 à 0,75 mm, de manière préférentielle, de 0,2 à 0,65 mm, de manière particulièrement préférentielle, de 0,25 à 0,55 mm, mesurée selon la méthode WRT 120.6(05) - option A.

11. Non-tissé selon l'une quelconque des revendications 1 à 10, le non-tissé (1) faisant preuve d'une résistance à l'abrasion d'au moins la classe 2 selon Martindale, de préférence de la classe 1 selon Martindale et / ou le non-tissé (1) faisant preuve d'une rigidité à la flexion maximale avec un cantilever d'un maximum de 100 mm, de préférence d'un maximum de 90 mm, de manière préférentielle, d'un maximum de 80 mm, de manière particulièrement préférentielle, d'un maximum de 75 mm et de manière tout particulièrement préférentielle, d'un maximum de 70 mm.

12. Non-tissé selon l'une quelconque des revendications 1 à 11, la résistance du non-tissé (1) dans la direction de la machine (direction MD) étant d'au moins 8 N/5 cm, notamment d'au moins 10 N/5 cm, de préférence d'au moins 15 N/5 cm, de manière préférentielle, d'au moins 17,5 N/5 cm, de manière particulièrement préférentielle, d'au moins 20 N/5 cm, de manière tout particulièrement préférentielle, d'au moins 22,5 N/5 cm.

13. Non-tissé selon l'une quelconque des revendications 1 à 12, la profondeur t des empreintes (4) étant respectivement de 0,1 à 0,8 mm, de manière préférentielle, de 0,15 à 0,7 mm, de manière particulièrement préférentielle, de 0,2 à 0,6 mm, de manière tout particulièrement préférentielle, de 0,25 à 0,5 mm.

14. Non-tissé selon l'une quelconque des revendications 1 à 13, le non-tissé (1) étant conçu sous la forme d'un stratifié de non-tissé composé d'au moins deux nappes (2, 2') de non-tissé ou couches de non-tissé.

15. Non-tissé selon l'une quelconque des revendications 1 à 14, le non-tissé (1) étant consolidé à l'aide d'au moins un rouleau calandreur (7), pour créer le motif de gaufrage (3) et de préférence à l'aide d'au moins une installation principale de consolidation par fluide chaud, notamment à l'aide d'u moins une installation principale de consolidation par air chaud (8).

16. Dispositif, destiné à fabriquer un non-tissé (1) selon l'une quelconque des revendications 1 à 15 , comprenant au moins une nappe (2) de non-tissé en fibres, le dispositif (9) présentant au moins une installation de production de fibres, notamment au moins une barre de filage (10) et au moins une installation de dépose, notamment au moins une bande de dépose (11) ajourée, destinée à déposer les fibres en une nappe (2) de non-tissé et par ailleurs, au moins un rouleau calandreur (7) pour ménager un motif de gaufrage (3) constitué d'une pluralités d'empreintes (4) dans le non-tissé (1) étant prévu, le rouleau calandreur (7) présentant à cet effet un motif de gaufrage (12) complémentaire en éléments de gaufrage (13), les éléments de gaufrage (13) présentant chacun une surface de pressage (14) de 0,07 à 0,18 mm², de manière particulièrement préférentielle, de 0,08 à 0,15 mm² et de manière tout particulièrement préférentielle, de 0,09 à 0,12 mm².

17. Dispositif selon la revendication 16, le dispositif (9) présentant au moins une installation principale de consolidation par fluide chaud, notamment au moins une installation principale de consolidation par air chaud (8), l'installation principale de consolidation par fluide chaud étant placée de préférence derrière le rouleau calandreur (7), dans la direction de convoyage F du non-tissé (1).

18. Dispositif selon l'une quelconque des revendications 16 ou 17, le dispositif présentant au moins une installation de préconsolidation, notamment au moins une installation de préconsolidation par fluide chaud, de manière préférentielle, au moins une installation de préconsolidation (15) par air chaud, l'installation de préconsolidation étant placée de manière particulièrement préférentielle devant le rouleau calandreur (7) dans la direction de convoyage F du non-tissé (1) et de manière tout particulièrement préférentielle étant montée en aval ou directement en aval de l'au moins une installation de production de fibres ou de l'au moins une barre de filage (10).

19. Procédé, destiné à fabriquer un non-tissé (1) comprenant au moins une nappe (2) de non-tissé en fibres, destiné notamment à fabriquer un non-tissé (1) selon l'une quelconque des revendications 1 à 15 et / ou à l'aide d'un dispositif (9) selon l'une quelconque des revendications 16 à 18, des fibres étant produites à l'aide d'au moins une installation de production de fibres, notamment à l'aide d'au moins une barre de filage (10), les fibres étant déposées ensuite sur au moins une installation de dépose, notamment sur au moins une bande de dépose (11) ajourée en une nappe (2) de non-tissé, la nappe (2) de non-tissé ou le non-tissé (1) étant consolidé(e) ensuite à l'aide d'au moins un rouleau calandreur (7) et au moyen de l'au moins un rouleau calandreur (7), un motif de gaufrage (3) constitué d'une pluralité d'empreintes (4) étant ménagé dans le non-tissé (1), les empreintes (4) présentant chacune une surface de gaufrage (5) de 0,07 à 0,18 mm², de manière particulièrement préférentielle, de 0,08 à 0,15 mm² et de manière tout particulièrement préférentielle, de 0,09 à 0,12 mm² et la proportion de la surface totale de gaufrage du motif de gaufrage (3) en rapport à la surface totale du non-tissé (1) étant de 2,5 à 8 %.

20. Procédé selon la revendication 19 - de préférence à la suite de la consolidation à l'aide de l'au moins une rouleau calandreur (7) - le non-tissé (1) étant soumis à une consolidation, notamment à une consolidation principale à l'aide d'au moins une installation de consolidation principale par fluide chaud, notamment à l'aide d'au moins une installation de consolidation principale (8) par air chaud.

21. Procédé selon l'une quelconque des revendications 19 ou 20, après la dépose sur l'installation de dépose, notamment sur la bande de dépose (11) ajourée, le non-tissé (1) étant soumis d'abord à une préconsolidation, à l'aide d'au moins une installation de préconsolidation, notamment à l'aide d'au moins une installation de préconsolidation par fluide chaud, de préférence à l'aide d'au moins une installation de préconsolidation (15) par air chaud, étant soumis de préférence par la suite à une consolidation à l'aide de l'au moins un rouleau calandreur (7) et ensuite étant soumis de manière préférentielle à l'aide d'une installation de consolidation principale par fluide chaud ou d'une installation de consolidation principale (8) par air chaud à une consolidation, notamment à une consolidation principale.

22. Procédé selon l'une quelconque des revendications 20 ou 21, la température superficielle de l'au moins un rouleau calandreur (7) étant supérieure, notamment de la valeur de 1 °C à 15 °C, de manière préférentielle, étant supérieure de la valeur de 1 °C à 5 °C, à la température du fluide chaud de l'au moins une installation de consolidation principale par fluide chaud ou étant inférieure à la température du fluide chaud de l'au moins au moins une installation de consolidation principale par fluide chaud ou étant inférieure à la température du fluide de l'au moins une installation de consolidation principale par fluide chaud ou étant identique ou sensiblement identique à la température du fluide chaud de l'au moins une installation de consolidation principale par fluide chaud.
